# FASCICULE DE BREVET EUROPEEN

(11) **EP 3 736 719 B1**
(45) Date de publication et mention de la délivrance du brevet: **08.12.2021**
(21) Numéro de dépôt: 20172259.2
(22) Date de dépôt: 30.04.2020
(51) Int. Cl.: G06F 21/54, G06F 21/55

(54) **PROCÉDÉ D'EXÉCUTION D'UN CODE BINAIRE D'UNE FONCTION SÉCURISÉE PAR UN MICROPROCESSEUR**
AUSFÜHRUNGSVERFAHREN EINES BINÄRCODES EINER DURCH EINEN MIKROPROZESSOR GESICHERTEN FUNKTION
METHOD FOR EXECUTING A BINARY CODE OF A SECURE FUNCTION BY A MICROPROCESSOR

(30) Priorité: 09.05.2019 FR 1904818
(43) Date de publication de la demande: 11.11.2020
(73) Titulaire: Commissariat à l'énergie atomique et aux énergies alternatives, 75015 Paris (FR)
(72) Inventeur: SAVRY, Olivier, 38054 GRENOBLE Cedex 9 (FR)
(74) Mandataire: INNOV-GROUP

(56) Documents cités:
- EP-A1- 3 457 620
- FR-A1- 3 065 095

## Description

L'invention concerne un procédé d'exécution d'un code binaire d'une fonction sécurisée par un microprocesseur. L'invention concerne également :
- un code binaire d'une fonction sécurisée, un support d'enregistrement d'informations et un microprocesseur pour la mise en œuvre de ce procédé d'exécution, et
- un compilateur pour générer ce code binaire.

Pour obtenir des informations sur un code binaire ou provoquer un fonctionnement inattendu du code binaire, de nombreuses attaques sont possibles. Par exemple, des attaques connues sous le terme d'« injection de fautes » ou « fault attack » en anglais peuvent être mises en œuvre. Ces attaques consistent à perturber le fonctionnement du microprocesseur ou de la mémoire contenant le code binaire, par divers moyens physiques comme des modifications des tensions d'alimentation, des modifications du signal d'horloge, l'exposition du microprocesseur à des ondes électromagnétiques et autres.

À l'aide de telles attaques, un attaquant peut altérer l'intégrité des instructions machines ou des données pour, par exemple, retrouver une clé secrète d'un système cryptographique, contourner des mécanismes de sécurité tels que la vérification d'un code PIN lors d'une authentification ou simplement empêcher l'exécution d'une fonction essentielle pour la sécurité d'un système critique.

Ces attaques peuvent provoquer notamment trois types de fautes, dites fautes d'exécution, lors de l'exécution du code binaire :
1) une altération des instructions du code machine exécuté,
2) une altération des données stockées dans la mémoire principale ou dans des registres du microprocesseur, et
3) une altération du flot de contrôle du code machine.

Le flot de contrôle correspond au chemin d'exécution suivi lors de l'exécution du code machine. Le flot de contrôle est classiquement représenté sous la forme d'un graphe connu sous le terme de graphe de flot de contrôle ou « control flow graph » en anglais.

Le code binaire d'une fonction peut être instrumenté pour permettre la détection et le signalement des fautes d'exécution. Lorsque le code binaire d'une fonction est ainsi instrumenté, ce code binaire est qualifié de « code binaire d'une fonction sécurisée ». En effet, contrairement au code binaire d'une fonction non-sécurisée, ce code binaire est apte à permettre le signalement de fautes d'exécution typiquement rencontrées en cas d'attaques.

A ce sujet, de l'état de la technique est connu de la demande EP3457620A1. Dans cette demande, chaque ligne LDⱼ de donnée enregistrée dans la mémoire principale à une adresse @ⱼ comporte un cryptogramme CDⱼ* de la donnée Dⱼ enregistrée dans la mémoire. Ce cryptogramme CDⱼ* est construit en utilisant un vecteur d'initialisation ivⱼ qui dépend de l'adresse @ⱼ à laquelle la ligne LDⱼ est enregistrée. Ensuite, en réponse à l'exécution d'une instruction de chargement d'une ligne de donnée à partir de l'adresse @ⱼ, un vecteur ivⱼ est construit à partir de cette adresse @ⱼ. Ensuite, le cryptogramme CDⱼ* contenu dans la ligne chargée est déchiffré en utilisant le vecteur ivⱼ construit. Si la ligne LDⱼ a été construite pour être enregistrée à une adresse @_{jd} puis déplacée à l'adresse @ⱼ sans que ce déplacement soit réalisé par le microprocesseur, alors le vecteur ivⱼ construit n'est pas le même que celui utilisé pour construire le cryptogramme CDⱼ*. Le déchiffrement de la donnée Dⱼ est donc incorrect dans ce cas. Ce déchiffrement incorrect déclenche le signalement d'une faute d'exécution. Ainsi, le procédé décrit dans la demande EP3457620A1 permet de détecter un déplacement malveillant d'une ligne de donnée.

En plus, dans la demande EP3457620A1, chaque ligne d'instruction LIⱼ enregistrée dans la mémoire principale comporte un cryptogramme CIⱼ* de l'instruction à exécuter. Ce cryptogramme CIⱼ* est construit en utilisant un vecteur ivₖ associé au bloc de base BBₖ qui contient cette ligne d'instruction. La valeur correcte du vecteur ivₖ à utiliser pour déchiffrer les lignes d'instruction du bloc BBₖ est chargée dans le microprocesseur uniquement lors de l'exécution du bloc de base précédent BBₖ₋₁. Ainsi, si un attaquant provoque un détournement du flot de contrôle qui conduit à exécuter un bloc BBₜ au lieu du bloc BBₖ, alors les lignes d'instructions du bloc BBₜ ne sont pas correctement déchiffrées. En effet, dans ce cas, c'est le vecteur ivₖ qui est utilisé pour déchiffrer les lignes d'instruction du bloc BBₜ et non pas le vecteur ivₜ associé à ce bloc BBₜ. Grace à cela le procédé de la demande EP3457620A1 permet de vérifier l'intégrité du flot de contrôle.

En parallèle de l'exécution de la fonction sécurisée, le microprocesseur peut exécuter une phase de réagencement de la mémoire principale. Une telle phase de réagencement de la mémoire principale permet de réorganiser l'agencement des lignes de la mémoire principale. Cette phase permet, par exemple, d'optimiser le fonctionnement de la mémoire principale et/ou d'allouer de la mémoire principale à un nouveau programme à exécuter. L'exécution de cette phase de réagencement conduit normalement à déplacer des lignes d'instruction et de donnée. Plus précisément, pour chaque ligne à déplacer, une instruction de chargement de cette ligne dans le microprocesseur est exécutée. Ensuite, une instruction d'enregistrement de la ligne chargée à un autre emplacement dans la mémoire principale est exécutée. Autrement dit, chaque ligne déplacée est traitée comme s'il s'agissait d'une ligne de donnée. Dès lors, comme décrit dans la demande EP3457620A1, l'exécution de l'instruction de chargement par le microprocesseur déclenche notamment la vérification que le cryptogramme CDⱼ* contenu dans la ligne chargée a bien été construit à l'aide du vecteur ivⱼ correspondant à l'adresse @ⱼ à partir de laquelle cette ligne a été chargée. Dans le cas où la ligne déplacée est une ligne de donnée, cette vérification, lors d'un fonctionnement normal, ne déclenche pas le signalement d'une faute d'exécution. Ainsi, le déplacement des lignes de donnée ne pose pas de problème particulier.

Par contre si la ligne déplacée est une ligne d'instruction, alors le microprocesseur vérifie si le cryptogramme CIⱼ* a bien été construit à partir du vecteur ivⱼ correspondant à l'adresse @ⱼ à partir de laquelle cette ligne a été chargée. Or, ce n'est jamais le cas puisque le cryptogramme CIⱼ* est construit à l'aide du vecteur ivₖ associé au bloc de base BBₖ auquel appartient cette ligne. Le vecteur ivₖ est indépendant de l'adresse @ⱼ. Dès lors, le déplacement d'une ligne d'instruction provoque systématiquement le signalement d'une faute d'exécution. Autrement dit, il n'est pas possible de déplacer les lignes d'instruction.

Cette demande EP3457620A1 divulgue aussi une variante dans laquelle le cryptogramme CIⱼ* de chaque ligne d'instruction est construit de la même manière que le cryptogramme CDⱼ*. Le cryptogramme CIⱼ* est donc construit en chiffrant la concaténation CIⱼ à l'aide du vecteur ivⱼ correspondant à l'adresse @ⱼ où cette ligne d'instruction est enregistrée dans la mémoire principale. Dans cette variante, le vecteur ivₖ n'est plus utilisé. Cette variante est intéressante car, dans ce cas, le déplacement de lignes d'instruction lors de la phase de réagencement ne déclenche plus systématiquement le signalement d'une faute d'exécution. Par contre, dans cette variante, il n'est plus possible de vérifier l'intégrité du flot de contrôle puisque le vecteur ivₖ ne peut plus être utilisé.

L'objectif ici est de proposer un procédé d'exécution d'un code binaire d'une fonction sécurisée qui offre au moins simultanément les possibilités suivantes :
- sécuriser les données et, en particulier, sécuriser les données contre des déplacements malveillants de ces données dans la mémoire principale,
- sécuriser le code machine contre les attaques qui provoquent un détournement du flot de contrôle, et
- permettre l'exécution de la phase de réagencement des lignes de la mémoire principal même si pour cela il faut déplacer des lignes d'instruction.

L'invention a donc pour objet un tel procédé d'exécution d'un code binaire d'une fonction sécurisée par un microprocesseur conforme à la revendication 1.

L'invention a également pour objet un code binaire d'une fonction sécurisée exécutable par un microprocesseur pour la mise en œuvre du procédé d'exécution revendiqué.

L'invention a également pour objet un support d'enregistrement d'informations lisible par un microprocesseur, ce support d'enregistrement d'informations comportant le code binaire revendiqué.

L'invention a également pour objet un microprocesseur pour la mise en œuvre du procédé d'exécution revendiqué.

Enfin, l'invention a également pour objet un compilateur apte à transformer automatiquement un code source d'une fonction sécurisée en un code binaire tel que revendiqué.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un appareil électronique apte à exécuter un code binaire d'une fonction sécurisée ;
- la figure 2 est une illustration schématique de la structure d'une ligne d'instruction codant une instruction du code binaire exécuté par l'appareil de la figure 1,
- les figures 3 à 5 sont des illustrations schématiques de différentes portions du code binaire de la fonction sécurisée susceptible d'être exécutée par l'appareil de la figure 1;
- la figure 6 est une illustration schématique de différents registres de l'appareil électronique, utilisés lors de l'exécution de la fonction sécurisée,
- la figure 7 est un organigramme d'un procédé d'exécution du code binaire de la fonction sécurisée ;
- la figure 8 est une illustration schématique de la structure d'une ligne de donnée du code binaire exécuté par l'appareil de la figure 1,
- la figure 9 est un organigramme d'un détail d'une étape du procédé de la figure 7 mise en œuvre pour sécuriser les données enregistrées dans une mémoire principale de l'appareil de la figure 1;
- la figure 10 est un organigramme d'une phase de réagencement d'une mémoire principale,
- la figure 11 est une illustration schématique d'un compilateur apte à générer le code binaire exécuté par l'appareil de la figure 1.

### Chapitre I : Conventions, notations et définitions :

Dans les figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé par un compilateur en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Un « flot d'instructions » est une succession d'instructions classées les unes après les autres et qui forme, dans le code machine, une suite ordonnée de bits. Le flot d'instructions débute par une instruction initiale et se termine par une instruction finale. Par rapport à une instruction donnée du flot d'instructions, les instructions situées du côté de l'instruction initiale sont appelées « instructions précédentes » et les instructions situées du côté de l'instruction finale, sont appelées « instructions suivantes ». Dans ce texte, ce flot d'instructions en mémoire est découpé en une succession de blocs de base immédiatement consécutifs ou séparés par des blocs de données.

Dans ce texte, un « bloc de base » est un groupe d'instructions successives du flot d'instructions qui débute à une adresse de branchement et qui se termine par une seule instruction de branchement explicite. Une instruction de branchement explicite se caractérise par la présence explicite d'un opcode dans le code machine qui code l'instruction de branchement. Ainsi, l'exécution d'un bloc de base débute systématiquement par l'exécution de sa première instruction et se termine systématiquement par l'exécution de l'instruction de branchement qui termine ce bloc de base. Un bloc de base ne comporte pas d'autres instructions de branchement que celle située à la fin de ce bloc de base. Ainsi, les instructions d'un bloc de base sont systématiquement toutes lues par le microprocesseur les unes après les autres dans l'ordre où elles sont présentes dans ce bloc de base. L'instruction de branchement peut diriger, lorsqu'elle est exécutée, le flot de contrôle systématiquement vers la même adresse de branchement ou, en alternance, vers différentes adresses de branchement. Ce dernier cas de figure se rencontre, par exemple, lorsqu'à la fin du bloc de base exécuté, le flot de contrôle peut se poursuivre vers un premier et, en alternance, vers un deuxième bloc de base.

Une « instruction de branchement» est une instruction qui, lorsqu'elle est exécutée par le microprocesseur, déclenche un saut vers l'adresse de branchement d'un autre bloc de base. Typiquement, à cet effet, cette instruction remplace la valeur actuelle du compteur ordinal par la valeur de l'adresse de branchement. On rappelle que le compteur ordinal contient l'adresse de la prochaine instruction à exécuter par le microprocesseur. En absence d'instruction de branchement, à chaque fois qu'une instruction est exécutée, le compteur ordinal est incrémenté de la taille de l'instruction actuellement exécutée. En absence d'instruction de branchement, les instructions sont systématiquement exécutées séquentiellement les unes après les autres dans l'ordre où elles sont enregistrées dans une mémoire principale. L'instruction de branchement peut être inconditionnelle, c'est à dire que le saut vers l'adresse de branchement est systématiquement réalisé dès que cette instruction est exécutée. Une instruction de branchement inconditionnel est par exemple l'instruction « JAL » dans le jeu d'instructions "RISC V". L'instruction de branchement peut aussi être conditionnelle, c'est-à-dire que le saut vers l'adresse de branchement est déclenché lors de son exécution uniquement si une condition particulière est vérifiée. Par exemple, une instruction de branchement conditionnel est une instruction « BRANCH » dans le jeu d'instructions "RISC-V" . L'instruction de branchement peut aussi bien être un appel à une fonction. Dans ce texte, à défaut d'indication contraire, le terme « instruction de branchement » désigne aussi bien les instructions de branchement direct qu'indirect. Une instruction de branchement direct est une instruction de branchement qui contient directement la valeur numérique de l'adresse de branchement. Une instruction de branchement indirect, est une instruction de branchement vers une adresse de branchement contenue dans une mémoire ou un registre du microprocesseur. Ainsi, contrairement à une instruction de branchement direct, une instruction de branchement indirect ne contient pas directement la valeur numérique de l'adresse de branchement. Par exemple, une instruction de branchement indirect est l'instruction "JALR" du jeu d'instructions RISC-V.

Une « adresse de branchement » est l'adresse dans la mémoire principale à laquelle se trouve la première ligne d'instruction d'un bloc de base.

On parle d'exécution d'une fonction pour désigner l'exécution des instructions réalisant cette fonction.

Dans un souci de simplification, dans cette description et dans les figures, les instructions ne sont pas représentées sous forme binaire, mais plutôt sous une forme symbolique exprimée dans un langage évolué de plus haut niveau.

### Chapitre II : Architecture de l'appareil :

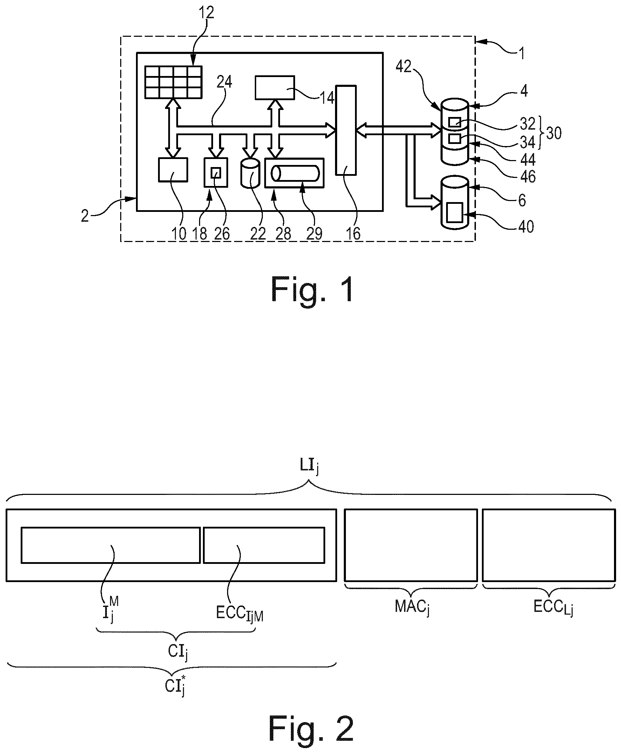

La figure 1 représente un appareil électronique 1 comportant un microprocesseur 2, une mémoire principale 4 et un support 6 de stockage de masse. Par exemple, l'appareil 1 est un ordinateur, un smartphone, une tablette électronique ou similaire.

Le microprocesseur 2 comporte ici :
- une unité arithmétique et logique 10 ;
- un ensemble 12 de registres ;
- un module de commande 14 ;
- une interface 16 d'entrée/sortie de données,
- un chargeur 18 d'instructions comportant un compteur ordinal 26,
- une file 22 d'instructions à exécuter, et
- un module matériel 28 de sécurisation.

La mémoire 4 est configurée pour stocker des instructions et des données d'un code binaire 30 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est réalisée sur un substrat mécaniquement séparé du substrat sur lequel sont réalisés les différents éléments du microprocesseur 2 comme l'unité 10.

Ici, la mémoire 4 est divisée en mots-machines successifs de longueur fixe. Chaque mot-machine peut être transféré en un seul cycle d'horloge depuis la mémoire 4 jusque dans un registre du microprocesseur. A cet effet, la taille N_{MM} d'un mot-machine est égale au nombre maximum de bits qui peuvent être transférés simultanément de la mémoire 4 vers un registre de l'ensemble 12. Ici, la taille N_{MM} est strictement supérieure Nᵢₙₛₜ bits, où Nᵢₙₛₜ bits est le nombre de bits des instructions du jeu d'instructions du microprocesseur 2. Typiquement, Nᵢₙₛₜ est un entier supérieure ou égale à 8, 16, 32 ou 64. Dans cet exemple, Nᵢₙₛₜ est égal à 32 et la taille N_{MM} est égale à 128 bits.

Classiquement, la mémoire 4 est principalement divisées en trois partie :
- une première partie 42 contenant les instructions à exécuter,
- une deuxième partie 44 contenant les données à traiter, et
- une troisième partie 46 utilisée pour sauvegarder le contexte d'exécution d'une fonction lorsqu'elle appelle une autre fonction.

La partie 46 est connue sous le terme de "pile d'exécution" ou "call stack" en anglais. Par conséquent, par la suite la partie 46 est également appelée "pile 46".

Le code binaire 30 comporte notamment un code machine 32 d'une fonction sécurisée et un bloc 34 de données nécessaires à l'exécution du code binaire 30. Le code machine 32 et le bloc 34 sont enregistrés dans, respectivement, les parties 42 et 44.

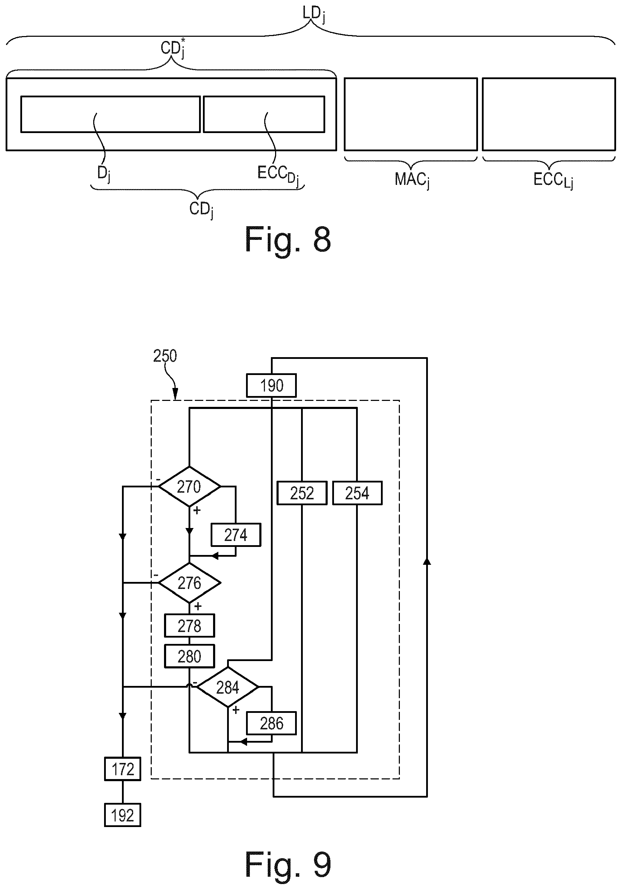

Chaque fonction sécurisée correspond à un ensemble de plusieurs lignes de code, par exemple plusieurs centaines ou milliers de lignes de code, enregistrées à des adresses successives dans la mémoire 4. Ici, chaque ligne de code correspond à un mot-machine. Ainsi, une ligne de code est chargée dans un registre du microprocesseur 2 en une seule opération de lecture. De même, une ligne de code est écrite dans la mémoire 4 par le microprocesseur 2 en une seule opération d'écriture. Chaque ligne de code correspond à une seule instruction ou à une seule donnée. Par la suite, lorsque la ligne de code contient une instruction, elle est appelée "ligne d'instruction". Lorsque la ligne de code contient une donnée, elle est appelée "ligne de donnée". Les structures d'une ligne d'instruction et d'une ligne de donnée sont décrites en détail en référence aux figures 2 et 8.

Le bloc 34 est typiquement situé dans une plage d'adresses prédéterminée au début du code binaire 30. Ainsi, l'exécution du code binaire 30 débute par le chargement et le traitement des données du bloc 34. Ici, le bloc 34 comporte notamment :
- un cryptogramme ka* obtenu en chiffrant une clé ka à l'aide d'une clé publique pk_{CPU} du microprocesseur 2, et
- des cryptogramme iv_{msbd}*, iv_{cted}*, MASK_{c}* chiffrés à l'aide de la clé publique pk_{CPU}, de différentes valeurs destinées à initialiser le contenu de différents registres du microprocesseur 2 afin de permettre le déchiffrement du code binaire 30.

A titre d'illustration, le microprocesseur 2 est conforme à l'architecture RISC (« Reduced Instructions Set Computer ») et il met en œuvre le jeu d'instructions "RISC-V".

Ici, l'unité 10 est une unité arithmétique et logique de Nᵢₙₛₜ bits.

Le chargeur 18 charge dans la file 22 la prochaine instruction à exécuter par l'unité 10 à partir de la partie 42 de la mémoire 4. Plus précisément, le chargeur 18 charge l'instruction sur laquelle pointe le compteur ordinal 26.

L'unité 10 est notamment configurée pour exécuter les unes après les autres les instructions chargées dans la file 22. Les instructions chargées dans la file 22 sont généralement systématiquement exécutées dans l'ordre où ces instructions ont été enregistrées dans cette file 22. L'unité 10 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Le module 14 est configuré pour déplacer des données entre l'ensemble 12 de registres et l'interface 16. L'interface 16 est notamment apte à acquérir des données et des instructions, par exemple, depuis la mémoire 4 et/ou le support 6 extérieurs au microprocesseur 2.

Le module 28 est capable d'exécuter automatiquement les différentes opérations décrites en détails dans les chapitres suivants pour sécuriser l'exécution des fonctions sécurisées. Le module 28 fonctionne indépendamment et sans utiliser l'unité 10. Ainsi, il est capable de traiter les lignes de code avant et/ou après que celles-ci soient traitées par l'unité 10. A cet effet, il comporte notamment une mémoire non-volatile sécurisée 29. Aucun accès à cette mémoire 29 sans passer par l'intermédiaire du module 28 n'est prévu. Dans ce mode de réalisation, le module 28 est pré-programmé, par exemple lors de sa conception, pour exécuter des opérations telles que les opérations suivantes :
- vérifier l'intégrité et l'authenticité d'une donnée à partir d'un code d'authentification de message plus connu sous l'acronyme MAC (« Message Authentification Code »),
- construire un code d'authentification de message,
- chiffrer une donnée pour obtenir un cryptogramme,
- déchiffrer un cryptogramme pour obtenir une donnée en claire,
- exécuter une fonction préprogrammée Fᵢᵥ, et
- exécuter une fonction préprogrammée Fₑ.

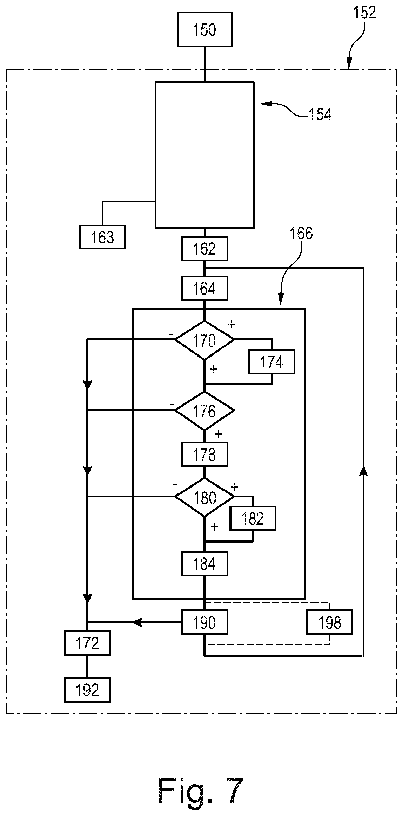

La mémoire 29 est utilisée pour stocker les informations secrètes nécessaires à la mise en œuvre du procédé de la figure 7. Ici, elle comporte donc notamment des informations secrètes pré-enregistrées avant le début de l'exécution du code binaire 30. En particulier, elle comporte les informations pré-enregistrées suivantes :
- une clé secrète k' utilisée pour la vérification des codes d'authentification de message,
- un clé privée secrète sk_{CPU} qui permet de déchiffrer les données qui ont été chiffrées à l'aide de la clé publique pk_{CPU}.

Dans cet exemple de réalisation, l'ensemble 12 comporte des registres généraux utilisables pour stocker tout type de données. La taille de chacun de ces registres est, par exemple, égale à N_{MM}.

Un bus d'échange de données 24 qui relie les différents composants du microprocesseur 2 entre eux est représenté sur la figure 1 pour indiquer que les différents composants du microprocesseur peuvent échanger des données entre eux.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

### CHAPITRE III : SÉCURISATION DU CODE MACHINE :

Ici, la structure du code machine de la fonction sécurisée est décrite dans le cas particulier du code machine 32. Toutefois, ce qui est décrit dans ce cas particulier se transpose sans difficulté à tout code machine d'une fonction sécurisée.

Le code machine 32 comporte une succession de lignes d'instruction LIⱼ enregistrées les unes après les autres dans la mémoire 4. Par la suite, dans ce chapitre, l'indice j est utilisé pour identifier la ligne d'instruction LIⱼ parmi les autres lignes d'instruction du code machine 32. De plus, l'indice j est aussi utilisé comme un numéro d'ordre indiquant dans quel ordre les lignes LIⱼ sont classées. Ainsi, on note LIⱼ₊₁ la ligne d'instruction située immédiatement après la ligne LIⱼ. Chaque ligne d'instruction LIⱼ code une instruction du jeu d'instructions du microprocesseur 2 apte à être exécutée après avoir été déchiffrée et décodée par l'unité 10 de ce microprocesseur.

Les structures de toutes les lignes LIⱼ sont identiques. Cette structure est représentée en détail sur la figure 2 dans le cas particulier de la ligne LIⱼ.

La ligne LIⱼ comporte un cryptogramme CIⱼ*, un code MACⱼ, et un code ECCLⱼ. Par la suite, on note @ⱼ l'adresse dans la mémoire 4 à laquelle est enregistrée la ligne LIⱼ.

Le cryptogramme CIⱼ* est obtenu en chiffrant une concaténation CIⱼ à l'aide de la clé secrète ka et d'un vecteur d'initialisation ivⱼ. Plus précisément, le cryptogramme CIⱼ* est obtenu à l'aide de la relation suivante : CIⱼ* = fₖₐ(CIⱼ ; ivⱼ), où fₖₐ est une fonction de chiffrement correspondant à une fonction de déchiffrement fₖₐ⁻¹ préprogrammée dans le module 28. Typiquement, la fonction fₖₐ est une fonction de chiffrement symétrique. Dès lors, la clé ka permettant de déchiffrer le cryptogramme CIⱼ* est préenregistrée dans la mémoire 29 afin de permettre au module 28 de déchiffrer ce cryptogramme CIⱼ*.

Le vecteur ivⱼ est un vecteur dont la valeur dépend de l'adresse @ⱼ. Dans ce mode de réalisation, le vecteur ivⱼ est codé sur 128 bits. Les 32 bits de poids fort ("most significant bit" en anglais) sont enregistrés dans un registre iv_{msbd}. Les 32 bits de poids faible sont enregistrés dans un registre iv_{lsbd}. Les 64 bits situés entre les 32 bits de poids faible et les 32 bits de poids fort sont enregistrés dans un ou plusieurs registres collectivement désignés par le terme "registre iv_{cted}". Chaque vecteur ivⱼ est donc le résultat de la concaténation des bits des registres iv_{msbd}, iv_{cted} et iv_{lsbd}. Ici, les contenus des registres iv_{msbd} et iv_{cted} sont constants durant toute l'exécution du code machine. Par exemple, les registres iv_{msbd} et iv_{cted} sont chargés avec ces valeurs constantes au début de l'exécution du code machine 32. Ces valeurs constantes sont obtenues en déchiffrant les cryptogrammes iv_{msbd}* et iv_{cted}* contenus dans le bloc 34.

Le contenu du registre iv_{lsbd}, utilisé lors du chiffrement de la concaténation CIⱼ, est fonction de l'adresse @ⱼ où est enregistrée la ligne LIⱼ. À cet effet, le module 28 comporte une fonction bijective préprogrammée Fᵢᵥ qui, à chaque adresse @ⱼ de la mémoire 4 associe une valeur différente du registre iv_{lsbd}. Par exemple, la fonction Fᵢᵥ est une fonction de hachage ou de chiffrement. On a donc la relation suivante : iv_{lsbd} = Fᵢᵥ(@ⱼ), où iv_{lsbd} désigne le contenu du registre iv_{lsbd}.

La concaténation CIⱼ est ici la concaténation d'une instruction masquée Iⱼ^{M} et d'un code ECC_{ljM}. L'instruction masquée Iⱼ^{M} est construite à partir d'une instruction Iⱼ à exécuter par le microprocesseur 2 et d'un masque dérivé Mⱼ. Par exemple, l'instruction masquée Iⱼ^{M} est le résultat de l'opération Iⱼ XOR Mⱼ, où le symbole XOR désigne l'opération booléenne "OU EXCLUSIF". Le masque Mⱼ est obtenu en utilisant la fonction Fₑ de la même manière que ce qui est décrit plus loin en référence à l'opération 184. Le code ECC_{ljM} permet de détecter une erreur dans l'instruction masquée Iⱼ^{M} et, éventuellement, de corriger cette erreur. Par exemple, le code ECC_{ljM} peut être le code connu sous l'acronyme BCH (Bose, Ray-Chaudhuri, Hocquenghem) qui présente l'avantage d'être particulièrement facile à mettre en œuvre. Toutefois, tout autre code détecteur ou correcteur d'erreur connu peut être mis en œuvre. La taille du code ECC_{ljM} est supérieure ou égale à 1 ou 2 ou 3 bits et, généralement, inférieure à Nᵢₙₛₜ. La taille du code ECC_{ljM} est déterminée en fonction de la robustesse souhaitée. Plus on veut être capable de corriger un nombre de bits erronés important dans l'instruction masquée Iⱼ^{M}, plus la taille du code ECC_{ljM} sera grande.

Le code MACⱼ est un code permettant de vérifier l'intégrité et l'authenticité du cryptogramme CIⱼ*.Ce code est communément appelé « code d'authentification de message » et connu sous l'acronyme MAC (« Message Authentification Code »). Un tel code MACⱼ est obtenu en construisant une étiquette à partir du cryptogramme CIⱼ* qui comporte normalement moins de bits que le cryptogramme CIⱼ*.Cette étiquette est construite à l'aide d'une fonction prédéterminée et de la clé secrète k' connue seulement de l'auteur du code binaire 30 et du microprocesseur 2. Ici, la clé k' est préenregistrée dans la mémoire 29. Par exemple, la fonction prédéterminée est une fonction de hachage. Dans ce cas, généralement, l'étiquette est le résultat de l'application de cette fonction de hachage à une combinaison, par exemple une concaténation, du cryptogramme CIⱼ* et de la clé k'.

À titre d'exemple, pour générer le cryptogramme CIⱼ* et le code MACⱼ, un algorithme de chiffrement authentifié est utilisé. Cet algorithme de chiffrement authentifié peut être choisi parmi les différents candidats à la compétition CAESAR (« Competition for Authentificated Encryption : Security, Applicability, and Robustness ») comme par exemple l'un des algorithmes désignés par les noms suivants : « ACORN », « ASCON », « SILC », « CLOC », « JAMBU », « KETJE ».

Le code ECC_{Lj} est un code correcteur d'erreur qui permet de détecter et de corriger une erreur dans le cryptogramme CIⱼ* et le code MACⱼ. Il est par exemple construit comme décrit dans le cas du code ECC_{ljM}.

Le cryptogramme CIₗⱼ* et les codes ECC_{ljM}, MACⱼ et ECC_{Lj} sont, typiquement, construits au moment où le code machine 32 est généré. A cet effet, lors de la génération du code machine 32, un premier algorithme C_{d} de construction d'un code correcteur d'erreur est d'abord exécuté. Cet algorithme C_{d} reçoit en entrée la donnée pour laquelle il doit calculer le code correcteur d'erreur et retourne en sortie la concaténation de cette donnée avec son code correcteur d'erreur. Ainsi, pour construire la concaténation CIⱼ, cet algorithme Cd réalise la fonction suivante : CIⱼ = C_{d}(Iⱼ^{M}). Ensuite, un second algorithme F_{c} est exécuté pour construire la ligne de code contenant le cryptogramme de la concaténation. Cet algorithme F_{c} reçoit en entrée la concaténation à coder dans la ligne de code et l'adresse @ⱼ de la ligne de code à construire. Après avoir été exécuté, il retourne en sortie la ligne contenant le cryptogramme de la concaténation. Ainsi, pour construire la ligne LIⱼ, cet algorithme F_{c} réalise la fonction suivante : LIⱼ = F_{c}(CIⱼ, @ⱼ). L'exécution de l'algorithme C_{d} pour obtenir une concaténation puis de l'algorithme F_{c} pour obtenir une ligne de code codant cette concaténation forme un algorithme de construction de cette ligne de code.

Le code machine 32 se compose d'une succession de blocs de base qui doivent être exécutés les uns après les autres. Ici, il existe un premier et un deuxième types de structures pour les blocs de base. Par la suite, les blocs de base qui présentent les structures du premier et du deuxième types sont appelés, respectivement, "bloc du premier type" et "bloc du deuxième type". Le premier type de structure est utilisé en cas de branchement direct. Le deuxième type de structure est utilisé en cas de branchement indirect.

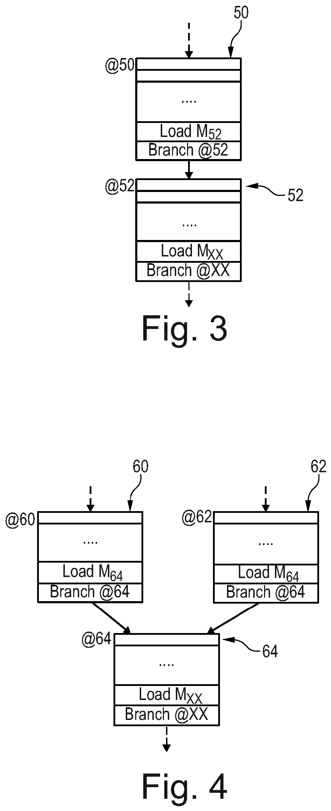

La figure 3 représente le premier type de structure. Plus précisément, la figure 3 représente un premier agencement de deux blocs de base 50 et 52 du code machine 32. Dans ce premier agencement, les blocs de base 50 et 52 sont systématiquement exécutés l'un après l'autre. Dans l'ordre d'exécution, le bloc de base 50 précède le bloc de base 52. Dans cette figure et les figures suivantes :
- l'ordre d'exécution des blocs de base est représenté par une flèche qui pointe du bloc de base précédent vers le bloc de base suivant,
- une flèche en pointillés qui pointe sur un bloc de base représenté indique que le ou les blocs de base qui précèdent ce bloc de base n'ont pas été représentés pour simplifier la figure,
- une flèche en pointillés qui pointe dans le vide depuis un bloc de base représenté indique que le ou les blocs de base suivants ce bloc de base représenté n'ont pas été représentés pour simplifier la figure,
- le symbole « ... » à l'intérieur d'un bloc de base indique que toutes les lignes d'instructions de ce bloc de base n'ont pas été représentées.

Chaque bloc de base se compose d'une succession de lignes d'instructions qui chacune comporte le cryptogramme CIⱼ* de l'instruction Iⱼ à exécuter et les codes MACⱼ et ECC_{Lj}. De plus, chaque bloc de base débute par une adresse de branchement et se termine par une ligne d'instruction qui contient le cryptogramme d'une instruction de branchement. Plus précisément, dans le cas du premier type de structure, la première ligne du bloc de base, située à l'adresse de branchement, est la première ligne d'instruction du bloc de base. Le bloc de base du premier type ne comporte aucune ligne de donnée.

Sur la figure 2, les symboles « @50 » et « @52 » à côté de la première ligne de chaque bloc de base désignent les adresses de branchement, respectivement, des blocs de base 50 et 52. Le symbole « @XX » désigne l'adresse de branchement d'un autre bloc de base non représenté sur la figure 2.

Le symbole « Load M_{XX}» indiqué dans l'avant dernière ligne d'instruction du bloc de base indique que cette ligne d'instruction comporte le cryptogramme d'une instruction de chargement direct. Lorsque l'instruction de chargement direct est exécutée par le microprocesseur 2, elle provoque le chargement d'un nouveau masque M_{XX} dans un registre MASK_{branch} du microprocesseur 2. La valeur du masque M_{XX} est directement contenue dans l'instruction "Load M_{XX}". Autrement dit, la valeur du masque M_{XX} est un opérande de l'instruction "Load M_{XX}". On notera que la valeur du masque M_{XX} est ici codée sur 32 bits et a donc la même longueur qu'une instruction. Ainsi, bien que l'on parle dans ce texte d'une instruction de chargement direct, en pratique cette instruction est généralement implémentée sous la forme d'une première et d'une deuxième instructions de 32 bits du jeu d'instructions du microprocesseur 2. Typiquement, lorsqu'elles sont exécutées, la première instruction charge une première partie des bits de la valeur du masque M_{XX} dans le registre MASK_{branch} et la seconde instruction charge les autres bits de la valeur du masque M_{XX} dans ce registre MASK_{branch}.

Le symbole "xx" dans le terme M_{XX} est un identifiant de ce masque. En effet, à chaque fois que l'instruction "Load M_{XX}" est exécutée, elle provoque le chargement d'un masque spécifique qui permet de déchiffrer les lignes d'instructions du bloc de base suivant. Ainsi, le symbole « Load M₅₂» indique que la valeur du masque M₅₂ est chargée dans le registre MASK_{branch} avant que débute l'exécution du bloc de base 52. Ici, chaque bloc de base est associé à son propre masque.

Le symbole « Branch @XX» indiqué à l'intérieur de la dernière ligne d'instruction du bloc de base indique que cette dernière ligne comporte le cryptogramme d'une instruction de branchement direct qui, lorsqu'elle est exécutée par le microprocesseur 2, provoque un branchement direct vers l'adresse de branchement @XX. Lorsqu'elle est exécutée, cette instruction provoque aussi le chargement de la valeur contenue dans le registre MASK_{branch} dans un registre MASK_{c} du microprocesseur 2. Le registre MASK_{c} contient les 32 bits du masque actuellement utilisé pour déchiffrer les lignes d'instructions.

Le même masque Mₖ est utilisé pour déchiffrer toutes les instructions du même bloc de base BBₖ. L'indice k identifie sans ambiguïté le bloc de base BBₖ parmi l'ensemble des blocs de base du code machine 32. Dans les figures et dans la description, le symbole Mₖ est par la suite utilisé pour désigner de façon générale le masque associé au bloc de base BBₖ. De plus, dans les cas simples comme celui représenté sur la figure 3 où deux blocs de base se suivent dans l'ordre d'exécution du code machine 32, l'indice k est aussi utilisé pour indiquer l'ordre dans lequel ces blocs de base sont exécutés. Par exemple, la notation BBₖ₋₁ est, dans ces cas simples, utilisée pour désigner le bloc de base précédent systématiquement exécuté immédiatement avant le bloc de base BBₖ.

Ici, le masque Mₖ est unique pour chaque bloc de base BBₖ. Par « unique pour chaque bloc de base», on désigne le fait que la probabilité que le même masque Mₖ soit utilisé pour chiffrer les lignes d'instructions de deux blocs de base différents du code machine 32 est inférieure à une chance sur 100 ou sur 1000. En particulier, l'expression « unique pour chaque bloc de base» couvre donc le cas où les masque Mₖ de tous les blocs de base sont systématiquement différents les uns des autres. Par exemple, dans un mode de réalisation simple, lors de la génération du code 32, les 32 bits du masque Mₖ de chaque bloc de base sont tirés de façon aléatoire ou pseudo-aléatoire dans l'ensemble {1 ; ...; 2^{Ninst}}.

Comme représenté sur la figure 3, dans le code 32, les 32 bits du masque M k sont chargés dans le registre MASK_{branch} uniquement lors de l'exécution d'un bloc de base précédent le bloc de base BBₖ. Sur la figure 3, le masque M₅₂ nécessaire pour déchiffrer les instructions du bloc 52 est chargé lors de l'exécution du bloc 50.

La figure 4 représente un autre agencement possible de plusieurs blocs de base du code 32 dans le cas particulier de deux blocs de base précédents 60 et 62 et d'un bloc de base suivant 64. Les blocs 60, 62 et 64 sont des blocs de base du premier type. Ici, les blocs 60 et 64 sont, par exemple, identiques, respectivement, aux blocs 50 et 52 sauf que le masque nécessaire pour déchiffrer les instructions du bloc 64 est noté «M₆₄ ». Le bloc 62 est construit comme le bloc 60 et, en particulier, il se termine par deux lignes d'instructions qui codent les mêmes instructions que celles codées dans les deux dernières lignes du bloc 60. Toutefois, même si ces deux dernières lignes codent les mêmes instructions, les cryptogrammes de ces instructions sont différents parce que les instructions du bloc 62 sont chiffrées en utilisant un masque M₆₂ différent du masque M₆₀ utilisé pour chiffrer les instructions du bloc 60. Les autres lignes d'instruction du bloc 62 sont différentes de celles du bloc 60.

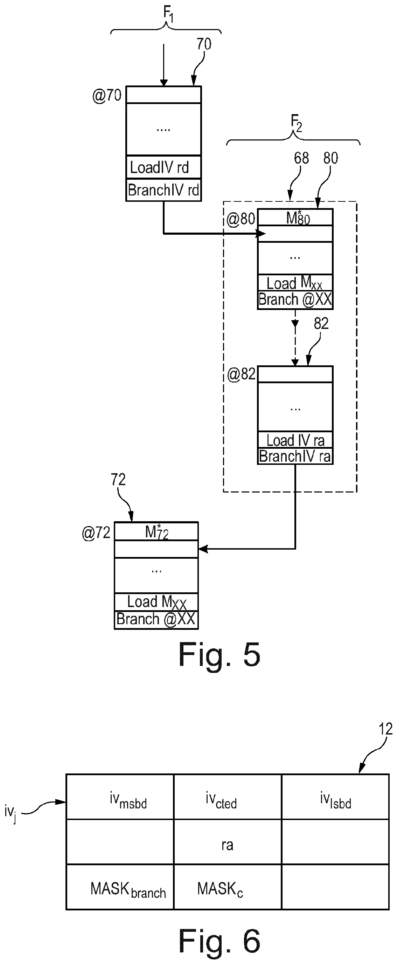

La figure 5 représente une partie de l'architecture du code machine 32 lorsqu'une fonction F₁ du code machine 32 appelle une fonction F₂ externe. A cet effet, le code machine de la fonction F₁ comporte un bloc 70 de base qui se termine par un appel au code machine 68 de la fonction F₂.

Le code machine 68 est agencé comme précédemment décrit pour le code machine 32. Il se compose donc d'une succession de blocs de base. Pour simplifier la figure 5, seul le premier bloc de base 80 et le dernier bloc de base 82 de ce code machine 68 ont été représentés. Ici, lorsque l'exécution de la fonction F₂ est terminée, c'est-à-dire après l'exécution du bloc 82, l'exécution du code machine 32 se poursuit par l'exécution d'un bloc 72 de base de la fonction F₁.

Les blocs 70, 72, 80 et 82 sont associés à des masques respectifs M₇₀, M₇₂, M₈₀ et M₈₂.

Ici, le code machine 32 est un code dynamique qui a été généré indépendamment du code machine 68. Par exemple, le code machine 68 a été généré avant ou après que le code machine 32 ait été généré. Par exemple, le code machine 68 est le code d'une fonction d'une bibliothèque de fonctions pré-enregistrées. Dans ce cas, typiquement, le code machine 68 peut être appelé, à des instants différents, par différents codes machines. L'adresse @80 du bloc 80 n'est donc pas connue au moment où le code machine 32 est compilé. A cause de cela, le bloc 70 se termine par une ligne d'instruction contenant le cryptogramme d'une instruction de branchement indirect notée "BranchIV rd" sur la figure 5. Lorsque l'instruction "BranchIV rd" est exécutée par le microprocesseur 2, elle provoque un saut vers une adresse @ⱼ de branchement construite à partir du contenu actuel d'un registre rd du microprocesseur 2. La construction de l'adresse @ⱼ à partir du contenu du registre rd est typiquement réalisé à l'aide de la relation suivante : @ⱼ = rd + offset + 4, où :
- @ⱼ est l'adresse construite,
- rd est la valeur contenue dans le registre rd,
- "offset" est une valeur numérique prédéterminée, et
- le symbole "+4" indique qu'une valeur constante est ajoutée au résultat de la somme rd + offset de manière à ce que l'adresse @ⱼ soit égale à l'adresse de la ligne d'instruction qui suit immédiatement celle située à l'adresse rd + offset. Classiquement, la valeur "offset" est passée en tant qu'opérande de l'instruction "BranchIV rd".

A ce stade, on remarquera que lorsque la somme rd + offset correspond à l'adresse de la première ligne d'un bloc de base, la somme rd + offset + 4 correspond à l'adresse de la deuxième ligne de ce bloc de base. Ainsi, contrairement à une instruction de branchement indirect conventionnelle, l'instruction "BranchIV" provoque un saut directement vers la deuxième ligne du bloc de base suivant. La première ligne de ce bloc de base suivant n'est donc pas exécutée dans ce mode de réalisation.

Le registre rd est chargé avec une valeur permettant de construire l'adresse @80. Typiquement, le registre rd est chargé avec la valeur qui permet de construire l'adresse @80, au début de l'exécution du code binaire 30, par un chargeur de bibliothèque dynamique plus connu sous le terme anglais de "dynamic library loader" ou simplement "loader". Ce chargeur de bibliothèque dynamique est, par exemple, celui d'un système d'exploitation exécuté par le microprocesseur 2. Ce mécanisme de chargement de bibliothèque dynamique étant bien connu, il n'est pas décrit ici.

De même, puisque le code machine 68 à exécuter n'est pas connu au moment de la compilation du code machine 32, le masque M₈₀ à utiliser pour déchiffrer les lignes d'instructions de ce bloc 80 n'est pas non plus connu. Il n'est donc pas possible d'introduire, lors de la compilation du code machine 32, l'instruction "Load M₈₀", précédemment décrite, dans le bloc 70 pour provoquer le chargement direct du masque M₈₀ dans le registre MASK_{branch}. A la place, lors de la génération du code machine 32, une instruction de chargement indirect d'un masque, notée "LoadIV rd", est introduite juste avant l'instruction "BranchIV rd". Lorsqu'elle est exécutée par le microprocesseur 2, l'instruction "LoadIV rd" provoque :
- la lecture du contenu de la ligne de donnée située à une adresse construite à partir du contenu du registre rd, puis
- la construction des 32 bits du masque M₈₀ à partir du contenu de la ligne de donnée lue, puis
- le chargement des 32 bits ainsi construit dans le registre MASK_{branch}.

Ici, dans le cas de l'instruction "LoadIV rd", la construction d'une adresse @ₖ à partir du contenu du registre rd est réalisée à l'aide de la relation suivante : @ₖ = rd + offset, où "rd" et "offset" sont les mêmes que ceux utilisés dans l'instruction "BranchIV rd". Ainsi, l'adresse @ₖ construite est l'adresse de la première ligne du bloc de base suivant. Par la suite, l'adresse de la première ligne du bloc de base BBₖ est notée @ₖ.

A cet effet, le bloc 80 est un bloc de base du deuxième type. Un bloc de base BBₖ du deuxième type est identique à un bloc de base du premier type sauf que la première ligne de ce bloc de base comporte une ligne de donnée LDₖ et non pas une ligne d'instruction. Cette ligne LDₖ contient la donnée permettant de construire les 32 bits du masque Mₖ associé au bloc de base BBₖ. A cet effet, elle comporte un cryptogramme, noté Mₖ* sur les figures, des 32 bits du masque Mₖ. Dans ce mode de réalisation, le cryptogramme Mₖ* est obtenu à l'aide de la relation suivante : Mₖ* = fₖₐ(Mₖ; ivⱼ), où :
- Mₖ est la valeur des 32 bits du masque Mₖ,
- ivⱼ est un vecteur d'initialisation construit comme précédemment décrit dans le cas du chiffrement de la concaténation CIⱼ, et
- la fonction fₖₐ est la même que celle précédemment décrite dans le cas du chiffrement des instructions.

Le vecteur d'initialisation ivⱼ utilisé pour obtenir le cryptogramme Mₖ* est donc lui aussi le résultat de la concaténation du contenu des registres iv_{msbd}, iv_{cted} et iv_{lsbd}. Dans ce cas, le contenu du registre iv_{lsbd} est égal à Fᵢᵥ(@ₖ), où :
- Fᵢᵥ est la même fonction que celle précédemment définie, et
- @ₖ est l'adresse de la première ligne du bloc BBₖ.

La structure d'une ligne de donnée telle que la ligne LDₖ est décrite plus loin en référence à la figure 8.

Le code machine 68 peut être appelé à partir de différents blocs de base du code machine 32 ou à partir de différents codes machines. Ainsi, le bloc de base qui doit être exécuté après le bloc de base 82 dépend du bloc de base qui a appelé le code machine 68. Il n'est pas connu au moment de la génération du code machine 68. Par conséquent, comme le bloc 70, le bloc de base 82 est un bloc de base du premier type qui se termine par une ligne d'instruction qui code une instruction "LoadIV ra" suivie d'une ligne d'instruction qui code l'instruction « BranchIV ra ». Les instructions "LoadIV ra" et "BranchIV ra" sont identiques, respectivement, aux instructions "LoadIV rd" et "BranchIV rd" précédemment décrites sauf que le registre rd est remplacé par le registre ra.

Lorsque le code 68 est appelée à partir du bloc 70, l'adresse @72 de retour du code machine 68 est typiquement sauvegardée dans le registre ra du microprocesseur 2. Si le code machine 68 appelle lui-même une autre fonction, alors l'adresse @72 est sauvegardée dans la pile 46 d'exécution et restaurée dans le registre ra juste avant d'exécuter les instructions "LoadIV ra" et "BranchIV ra" du bloc 82.

Le bloc 72 est un bloc de base du deuxième type. Sa première ligne à l'adresse @72 est donc une ligne de donnée qui contient le cryptogramme M₇₂* du masque M₇₂ associé au bloc BB₇₂.

La figure 6 représente les principaux registres décrits jusqu'à présent. Ces registres peuvent être des registres de l'ensemble 12 et/ou des registres du module 28. De préférence, les registres du module 28 sont utilisés pour enregistrer les informations utilisées pour chiffrer ou déchiffrer. Ainsi, de préférence, les registres iv_{msbd}, iv_{cted}, iv_{lsbd}, MASK_{branch}, MASK_{c} sont des registres contenus dans la mémoire 29.

La figure 7 représente un procédé d'exécution du code binaire 30 par le microprocesseur 2.

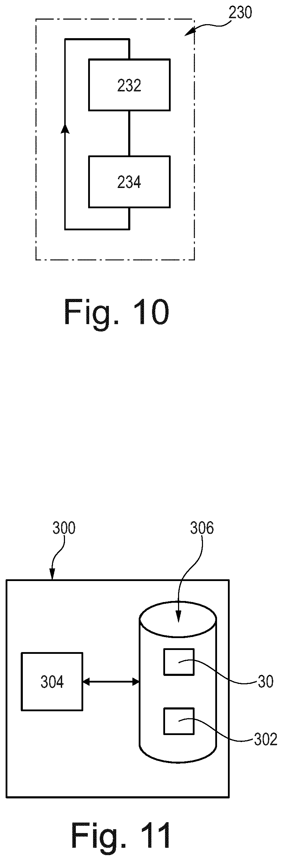

Le procédé débute par une étape 150 de génération puis de fourniture du code binaire 30 dans la mémoire 4. La génération du code binaire 30 est typiquement réalisée par un compilateur tel que celui décrit en référence à la figure 11. La fourniture du code binaire 30 consiste ici ensuite à fournir la copie 40 puis, par exemple, le microprocesseur 2 recopie la copie 40 à l'intérieur de la mémoire 4 pour obtenir le code binaire 30 enregistré dans la mémoire 4.

Ensuite, lors d'une phase 152, le microprocesseur 2 exécute le code binaire 30 et, en particulier, le code machine 32.

Éventuellement, l'exécution du code binaire 30 commence par une étape 154 d'authentification de l'auteur de ce code binaire. Si toutes l'authentification a été réussie avec succès, alors le procédé se poursuit par une étape 162. À l'inverse, si l'authentification n'a pas été réussie avec succès, le module 28 considère alors que l'authentification de l'auteur du code binaire 30 a échoué et le procédé se poursuit par une étape 163. Lors de l'étape 163, l'exécution du code binaire 30 est arrêtée.

Lors de l'étape 162, le module 28 charge les cryptogrammes ka* et MASK_{c}*, iv_{msbd}*, iv_{cted}*, contenus dans le bloc 34 et les déchiffre à l'aide de la clé sk_{CPU} contenue dans la mémoire 29. Le module 28 initialise les valeurs contenues dans les registres MASK_{c}, iv_{msbd}, iv_{cted}, à partir, respectivement, des cryptogrammes MASK_{c}*, iv_{msbd}*, iv_{cted}*, déchiffrés. À l'issue de l'étape 162, la clé ka et le masque Mₖ utilisé pour déchiffrer le premier bloc de base du code machine 32 sont contenus dans la mémoire 29.

Après l'étape 162, le microprocesseur 2 exécute, les uns après les autres, les blocs de base en commençant par le premier bloc de base BB₁ du code machine 32.

L'exécution de chaque bloc de base consiste à exécuter, dans l'ordre où les lignes d'instruction LIⱼ de ce bloc de base sont enregistrées dans la mémoire 4, les instructions codées par chacune de ces lignes d'instruction.

Pour chacune des lignes d'instruction LIⱼ à exécuter, le microprocesseur 2 exécute les étapes suivantes.

Lors d'une étape 164, le microprocesseur 2 charge dans un registre de l'ensemble 12, la ligne d'instruction LIⱼ enregistrée à l'adresse @ⱼ contenue dans le compteur ordinal 26.

Ensuite, le module 28 procède à une étape 166 de sécurisation de l'instruction codée dans la ligne d'instruction chargée.

Le fonctionnement de l'étape 166 est maintenant décrit dans le cas de la ligne LIⱼ. Plus précisément, lors de l'étape 166, le module 28 réalise successivement les opérations suivantes.

Lors d'une opération 170, le module 28 vérifie s'il existe une erreur dans le cryptogramme CIⱼ* ou le code MACⱼ à l'aide du code ECC_{Lj} contenu dans la ligne LIⱼ chargée. Par exemple, pour cela, le module 28 construit, à l'aide d'une fonction préprogrammée et du cryptogramme CIⱼ* et du code MACⱼ, un code ECC_{Lj}'. Si le code ECC_{Lj}' est différent du code ECC_{Lj¸} alors une erreur est détectée. Si une erreur est détectée, le module 28 procède immédiatement à une étape 172.

Lors de l'étape 172, le module 28 déclenche le signalement d'une faute d'exécution.

Ici, en parallèle de l'étape 172, si une erreur est détectée, le module 28 procède à une opération 174. Lors de l'opération 174, il corrige le cryptogramme CIⱼ* et le code MACⱼ à partir des informations contenues dans le code ECC_{Lj}. À l'issue de l'étape 174, le cryptogramme CIⱼ* corrigé et le code MACⱼ corrigé sont utilisés à la place, respectivement, du cryptogramme CIⱼ* et du code MACⱼ contenus dans la ligne LIⱼ.

L'opération 170 permet notamment de détecter et de corriger des fautes introduites dans les lignes d'instruction stockées dans la mémoire 4.

À l'issue de l'opération 174 ou si aucune erreur n'a été détectée lors de l'opération 170, le procédé se poursuit par une opération 176.

Lors de l'opération 176, le module 28 vérifie l'intégrité et l'authenticité du cryptogramme CIⱼ* à l'aide du code MACⱼ. Par exemple, pour cela, le module 28 construit une étiquette du cryptogramme CIⱼ* puis chiffre cette étiquette avec la clé k' contenue dans sa mémoire 29. Si le cryptogramme ainsi construit est identique au code MACⱼ chargé, alors l'intégrité et l'authenticité du cryptogramme CIⱼ* est confirmée. Dans ce cas, le module 28 procède à une opération 178. Dans le cas contraire, le module 28 procède à l'étape 172.

L'opération 176 permet d'une part de valider l'authenticité de la ligne de code chargée et aussi de valider que, lors de l'opération 174, le cryptogramme CIⱼ* et/ou le code MACⱼ ont correctement été corrigés. La vérification de l'authenticité empêche le remplacement de la ligne de code par une autre ligne de code construite par un auteur qui ne connaît pas la clé k'.

Lors de l'opération 178, le module 28 déchiffre le cryptogramme CIⱼ* en utilisant la clé ka, le vecteur d'initialisation ivⱼ et la fonction fₖₐ⁻¹ pour obtenir la concaténation CIⱼ déchiffrée. On rappelle que cette concaténation CIⱼ contient l'instruction masquée Iⱼ^{M} et le code ECC_{ljM} déchiffrés. La clé ka a été enregistrée dans la mémoire 29 lors de l'étape 162. Lors de l'opération 178, le vecteur iv_{lsbd} est calculé par le module 28 à l'aide de la relation : iv_{lsbd} = Fᵢᵥ(@ⱼ), où @ⱼ est l'adresse à partir de laquelle la ligne LIⱼ a été chargée lors de l'étape 164. Ensuite, le vecteur ivⱼ utilisé pour déchiffrer le cryptogramme CIⱼ* est le résultat de la concaténation du vecteur iv_{lsbd} calculé et des vecteurs iv_{msbd} et iv_{cted} initialisés lors de l'étape 162.

Ensuite, lors d'une opération 180, le module 28 vérifie s'il existe une erreur dans l'instruction masquée Iⱼ^{M} à l'aide du code ECC_{ljM} obtenue lors de l'opération 178. Cette opération est réalisée de façon similaire à ce qui a été décrit pour l'opération 170. Cette opérations 180 permet de vérifier que la ligne chargée à bien été construite à partir du vecteur ivⱼ correspondant à l'adresse @ⱼ.

Si le module 28 détecte une erreur, alors il procède immédiatement à l'étape 172. De plus, en parallèle, lors d'une opération 182, le module 28 corrige l'instruction masquée Iⱼ^{M} à l'aide du code ECC_{ljM}. L'opération 182 est similaire à l'opération 174.

Ensuite, à l'issue de l'opération 182 ou si aucune erreur n'a été détectée lors de l'opération 180, le procédé se poursuit par une opération 184.

Lors de l'opération 184, le module 28 déchiffre l'instruction masquée Iⱼ^{M} obtenue. Pour cela, il obtient le masque dérivé Mⱼ à partir du masque Mₖ actuellement enregistré dans le registre MASK_{c}. Le registre MASK_{c} contient le masque chargé lors de l'exécution du bloc de base précédent celui qui contient cette ligne LIⱼ actuellement traitée. Si la ligne LIⱼ est contenue dans le premier bloc de base BB₁ du code machine 32, c'est les valeurs initiales des registres MASK_{c} qui est utilisée.

Ici, c'est l'exécution de l'instruction de branchement "Branch @xx" ou "BranchIV rd" ou "BranchIV ra", par l'unité 10, qui indique au module 28 qu'il doit remplacer le contenu du registre MASK_{c} par le contenu du registre MASK_{branch}. Le contenu du registre MASK_{branch} est mis à jour lors de l'exécution de l'instruction "Load M_{XX}" ou "LoadIV rd" ou "LoadIV ra" qui précède l'instruction de branchement.

Le masque dérivé Mⱼ est dérivé du masque Mⱼ₋₁ en utilisant la fonction préprogrammée Fₑ. Ici, le masque Mⱼ est obtenu à l'aide de la relation suivante : Mⱼ = Fₑ(Mⱼ₋₁), où Mⱼ₋₁ est le masque dérivé obtenu lors du déchiffrement de la précédente instruction Iⱼ₋₁ du même bloc de base BBₖ. La fonction Fₑ est une fonction qui modifie d'une façon prédéterminée le précédent masque dérivé Mⱼ₋₁ de sorte que le masque Mⱼ obtenu est différent du masque Mⱼ₋₁ et, généralement, différent de tous les masques dérivés obtenus pour les précédentes lignes d'instruction de ce même bloc de base BBₖ. De nombreuses fonctions Fₑ sont possibles. Par exemple, la fonction Fₑ est choisie dans le groupe composé des fonctions suivantes et de leur composition :
- Fₑ₁ : une fonction de permutation,
- Fₑ₂ : un registre à décalage à rétroaction linéaire ou LFSR *("linear feedback shift register")*,
- Fₑ₃ : un chiffrement pas flot ou par bloc,
- Fₑ₄ : une combinaison bit-à-bit entre les bits du masque Mₖ et des bits susceptibles de varier à chaque exécution d'une précédente instruction du bloc BBₖ.

A titre d'exemple de la fonction Fₑ₄, on peut citer la fonction suivante Mⱼ = Mₖ XOR Iⱼ₋₁ ou encore la combinaison des bits du masque Mₖ avec des bits de contrôle mis à jour lors de l'exécution de l'instruction Iⱼ₋₁ et distinct des bits de l'instruction Iⱼ₋₁. A titre d'exemple de bits de contrôle, on peut citer le bit qui indique à l'unité 10 la présence d'une retenue ou celui qui indique à l'unité 10 si la donnée traitée lors de l'exécution de l'instruction Iⱼ₋₁ est une donnée signée ou non.

Ici, la fonction Fₑ est la fonction Fₑ₁.

Lorsque l'instruction Iⱼ est l'instruction contenue dans la première ligne d'instruction du bloc de base, la valeur du masque Mⱼ est initialisée à partir de la valeur du masque Mk. Par exemple, dans ce cas, le masque Mⱼ est pris égal à Fₑ(Mₖ) ou à Mₖ. Ainsi, tous les masques dérivés utilisés pour déchiffrer les instructions du bloc BBₖ sont dérivés du masque Mₖ. Dès lors, si le masque chargé dans le registre MASK_{c} n'est pas celui associé au bloc BBₖ, les instructions du bloc BBₖ ne sont pas correctement déchiffrées. Les instructions du bloc BBₖ ne sont pas non plus correctement déchiffrées si une attaque conduit à sauter directement au milieu du bloc BBₖ. Dans ce cas, le masque dérivé Mⱼ calculé ne permet pas de déchiffrer correctement l'instruction Iⱼ^{M} car la fonction Fₑ n'a pas été exécutée pour les précédentes lignes d'instruction.

Une fois que le masque dérivé Mⱼ a été obtenu, l'instruction masquée Iⱼ^{M} est ici déchiffrée selon la relation suivante : Iⱼ = Iⱼ^{M} XOR Mⱼ.

A la fin de l'opération 184, le module 28 enregistre l'instruction Iⱼ déchiffrée dans la file 22.

Une fois que l'unité 10 a exécuté toutes les instructions qui précédent l'instruction Iⱼ dans la file 22, c'est-à-dire lorsque l'instruction Iⱼ est la prochaine instruction à exécuter par l'unité 10, lors d'une étape 190, l'unité 10 exécute l'instruction Iⱼ.

Comme représenté sur la figure 7, en parallèle de l'étape 190, le procédé comporte une étape 250 de sécurisation des données traitées. Cette étape 250 est décrite plus en détail dans le chapitre suivant.

Le fait de chiffrer la concaténation CIⱼ à l'aide du vecteur d'initialisation ivⱼ qui dépend de l'adresse @ⱼ permet de détecter si la ligne LIⱼ a été déplacée dans la mémoire 4 sans que cela soit fait par le microprocesseur 10. Par exemple, si deux lignes LI₁ et LI₂ sont permutées, une telle permutation des lignes LI₁ et LI₂ n'est pas nécessairement détectée lors de l'opération 170 ou 176. Par contre, puisque la concaténation CI₁ est chiffrée avec un vecteur d'initialisation iv₁ qui dépend de l'adresse @₁, si la ligne LI₁ est déplacée et se situe à une adresse @₂ dans la mémoire 4, lors du chargement de cette ligne à partir de cette adresse @₂, le cryptogramme CD₁* va être déchiffré à l'aide du vecteur iv₂ et non pas à l'aide du vecteur iv₁. Un tel déchiffrement incorrect de la concaténation CI₁ est alors détecté lors de l'opération 180. Ainsi, l'opération 180 permet de vérifier que la ligne LI₁ a bien été construite à partir du vecteur iv₁.

L'opération 184 permet de déclencher une faute d'exécution si le flot de contrôle du code machine 32 a été modifié. En effet, une modification du flot de contrôle se traduit par le fait qu'après l'exécution du bloc de base BBₖ₋₁ ce n'est pas le bloc de base BBₖ qui est exécuté mais un autre bloc de base BBₜ. Dans ce cas, lors de l'exécution du bloc BBₖ₋₁, le masque Mₖ est chargé dans le registre MASK_{branch}. Dès lors, lors de l'exécution du bloc BBₜ, l'instruction masquée Iⱼ^{M} est déchiffrée à l'aide du masque Mₖ associé au bloc BBₖ et non pas à l'aide du masque Mₜ associé au bloc BBₜ. Par conséquent, le déchiffrement de l'instruction masquée Iⱼ^{M} à l'aide du masque Mₖ conduit à l'obtention d'une instruction Iⱼ incorrecte. Cette instruction Iⱼ incorrecte a typiquement plus d'une chance sur deux ou plus d'une chance sur quatre de ne pas appartenir au jeu d'instructions prédéfini de l'unité 10. Lorsque l'instruction à exécuter par l'unité 10 n'appartient pas à son jeu d'instructions, cela déclenche une faute d'exécution. Par exemple, dans ce cas, le procédé se poursuit par l'étape 172 et/ou cela provoque l'arrêt brutal de l'exécution du code machine 30. Ainsi, l'opération 184 permet de rendre le code machine plus robuste vis-à-vis des attaques visant à modifier le flot de contrôle. Typiquement, ces attaques perturbent l'exécution de l'opération "Branch @XX" ou " BranchIV ra" ou "BranchIV rd".

L'opération 184 permet aussi de détecter la permutation, dans la mémoire 4, des deux blocs de base BBₖ et BBₜ du deuxième type. En effet, si le bloc BBₖ est remplacé par le bloc BBₜ, alors, lors de l'exécution de l'instruction "LoadIV ra" du bloc BBₖ₋₁, la première ligne de donnée du bloc BBₜ est déchiffrée à l'aide d'un vecteur ivⱼ construit à partir de l'adresse @ₖ et non pas à partir de l'adresse @ₜ. Cela conduit donc à un déchiffrement incorrect du cryptogramme Mₖ* et donc à un déchiffrement incorrect de la première ligne d'instruction du bloc BBₜ.

Lors de l'exécution du code machine 32, si des attaques conduisent à altérer une instruction à protéger ou à modifier le flot de contrôle, le microprocesseur 2 signale, lors de l'étape 172, une faute dans l'exécution du code machine 32. En réponse à un tel signalement, lors d'une étape 192, le microprocesseur 2 met en œuvre une ou plusieurs contre-mesures. De très nombreuses contre-mesures sont possibles. Les contre-mesures mises en œuvre peuvent avoir des degrés de sévérité très différents. Par exemple, les contre-mesures mises en œuvre peuvent aller d'un simple affichage ou une simple mémorisation d'un message d'erreur sans interrompre l'exécution normale du code machine 32 jusqu'à une mise hors service définitive du microprocesseur 2. Le microprocesseur 2 est considéré comme étant hors service lorsqu'il est définitivement placé dans un état où il est incapable d'exécuter un quelconque code machine. Entre ces degrés de sévérité extrêmes, il existe de nombreuses autres contre-mesures possibles telles que :
- l'indication par l'intermédiaire d'une interface homme-machine de la détection des fautes,
- l'interruption immédiate de l'exécution du code machine 32 et/ou sa réinitialisation, et
- la suppression du code machine 32 de la mémoire 4 et/ou la suppression de la copie 40 de sauvegarde et/ou la suppression des données secrètes.

De plus, ici, la contre-mesure mise en œuvre lors de l'étape 192 peut être sélectionnée en fonction de l'erreur détectée et donc en fonction de l'opération qui a conduit à la détection de cette faute. Par exemple, la contre-mesure sélectionnée ne sera pas la même selon que l'erreur a été détectée lors de l'opération 176 ou 180.

### CHAPITRE IV : SÉCURISATION DES DONNEES :

Des données Dⱼ traitées lors de l'exécution du code machine 32 sont enregistrées dans la mémoire 4. Par exemple, le code binaire 30, en plus du code machine 32, peut comporter des données à traiter lors de l'exécution du code machine 32. De plus, lors de l'exécution du code machine 32, celui-ci peut générer des données. Ces données sont typiquement contenues dans la partie 44 de la mémoire 4.

De même, à chaque fois qu'une fonction appelante déclenche l'exécution d'une fonction appelée, le contexte d'exécution de la fonction appelante est sauvegardé dans la pile 46. La fonction appelée sauvegarde également dans la pile 46 des données telles que des variables locales.

De façon similaire à ce qui a été décrit dans le cas des instructions Iⱼ, une donnée Dⱼ enregistrée dans la partie 44 ou dans la pile 46 peut être corrompue par la mise en œuvre d'attaques comme, par exemple, une attaque par injection de fautes.

Pour protéger les données vis-à-vis de telles attaques, ici, chaque donnée Dⱼ enregistrée dans la mémoire 4 est codée dans une ligne respective LDⱼ. La ligne LDⱼ est une ligne de donnée. Contrairement aux lignes d'instructions LIⱼ décrites dans le chapitre III, la ligne LDⱼ code une donnée Dⱼ à traiter par le microprocesseur et non pas une instruction Iⱼ exécutable par l'unité 10.

La structure d'une ligne LDⱼ est représentée sur la figure 8. Ici, la structure de la ligne LDⱼ est identique à la structure de la ligne LIⱼ sauf que le cryptogramme CIⱼ* est remplacé par un cryptogramme CDⱼ*. Étant donné que les codes MACⱼ et ECC_{Lj} de la ligne LDⱼ sont calculés comme déjà décrit dans le cas des lignes LIⱼ, ils sont ici désignés par les mêmes symboles et ne sont pas décrits à nouveau.

Le cryptogramme CDⱼ* est obtenu en chiffrant, avec la fonction fₖₐ, une concaténation CDⱼ. La fonction fₖₐ est la même que celle déjà décrite dans le cas des lignes LIⱼ. Ainsi, le cryptogramme CDⱼ* est obtenu à l'aide de la relation suivante : CDⱼ* = fₖₐ(CDⱼ ; ivⱼ). La fonction fₖₐ est préprogrammée dans le module 28.

Le vecteur ivⱼ est construit de la même façon que ce qui a précédemment été décrit pour les lignes d'instructions. À cet effet, le module 28 utilise la fonction Fᵢᵥ précédemment décrite. On utilise donc toujours la relation suivante : iv_{lsbd} = Fᵢᵥ(@ⱼ), où @ⱼ est l'adresse où est enregistrée la donnée Dⱼ dans la mémoire 4.

La concaténation CDⱼ est la concaténation de la donnée Dⱼ et d'un code ECC_{Dj}. Le code ECC_{Dj} permet de détecter et de corriger une erreur dans la donnée Dⱼ. II est construit comme décrit pour le code ECCₗⱼ sauf que l'instruction masquée Iⱼ^{M} est remplacée par la donnée Dⱼ. Ici, la donnée Dⱼ n'est pas masquée ou chiffrée avant d'être insérée dans la concaténation CDⱼ.

La sécurisation des données Dⱼ sauvegardées dans la mémoire 4 va maintenant être décrite plus en détail en référence au procédé de la figure 9 et dans le cas particulier où elle est mise en œuvre en combinaison avec les enseignements des autres chapitres. Plus précisément, la sécurisation des données Dⱼ intervient à chaque fois que l'instruction exécutée lors de l'étape 190 est une instruction de lecture ou d'écriture d'une donnée Dⱼ dans la mémoire 4. Le procédé de la figure 9 représente les opérations exécutées lors de l'étape 198 pour sécuriser les données Dj.

À chaque fois que lors de l'étape 190, l'unité 10 exécute une instruction qui conduit à enregistrer une nouvelle donnée Dⱼ dans un registre, noté ici Rⱼ, de l'ensemble 12, lors d'une opération 252, le module 28 construit la concaténation CDⱼ et l'enregistre dans le registre Rⱼ. Ici, pour cela, le module 28 exécute le même algorithme Cd que celui exécuté pour construire la concaténation CIⱼ. Cette exécution de l'algorithme Cd réalise la fonction suivante : CDⱼ = C_{d}(Dⱼ).

Ultérieurement, lors d'une nouvelle exécution de l'étape 190, l'unité 10 exécute une instruction d'enregistrement de la donnée Dⱼ contenue dans le registre Rⱼ à l'adresse @ⱼ de la pile 46.

En réponse, lors d'une opération 254, le module 28 construit la ligne de donnée LDⱼ qui doit être enregistrée à l'adresse @ⱼ. Pour cela, il exécute le même algorithme F_{c} que celui utilisé pour construire une ligne LIⱼ. Lors de cette exécution, il réalise la fonction suivante : LDⱼ = F_{c}(CDⱼ, @ⱼ). L'exécution de l'algorithme F_{c} conduit notamment le module 28 à réaliser les opérations suivantes :
- mise à jour du contenu du registre iv_{lsbd} à l'aide de la relation iv_{lsbd} = Fᵢᵥ(@ⱼ), puis
- chiffrement de la concaténation CDⱼ de la donnée Dⱼ et du code ECC_{Dj} à l'aide de la fonction fₖₐ et du vecteur d'initialisation ivⱼ en utilisant la relation suivante : CDⱼ* = fₖₐ(CDⱼ ; ivⱼ), puis
- calcule le code MACⱼ à partir du cryptogramme CDⱼ*, puis
- calcule le code ECC_{Lj} à partir du cryptogramme CDⱼ* et du code MACⱼ calculé.

Ensuite, à la fin de l'opération 254, la ligne LDⱼ construite est transférée et enregistrée dans la mémoire 4 à l'adresse @ⱼ.

Si la prochaine instruction à exécuter lors de l'étape 190 est une instruction de chargement d'une ligne LDⱼ, alors, l'unité 10 exécute cette instruction et la ligne LDⱼ est chargée dans un registre du microprocesseur 2. Typiquement, cette instruction de chargement comporte un opérande qui indique à quelle adresse @ⱼ se trouve la ligne LDⱼ à charger. Ici, lorsque l'unité 10 exécute cette instruction de chargement, elle charge la ligne LDⱼ dans un registre Rⱼ de l'ensemble 12 par exemple.

Ensuite, le module 28 exécute des opérations 270, 274, 276 et 278 identiques, respectivement, aux opérations 170, 174, 176 et 178 du procédé de la figure 7 sauf que ce sont les codes correspondants contenus dans la ligne LDⱼ qui sont utilisés et non pas ceux contenus dans une ligne LIⱼ.

Une fois que le cryptogramme CDⱼ* a été déchiffré, lors d'une opération 280, le module 28 enregistre la donnée Dⱼ déchiffrée et le code ECC_{Dj} déchiffré dans le registre Rⱼ en attendant que cette donnée soit traitée par l'unité 10.

Lorsque la prochaine instruction qui va être exécutée par l'unité 10 est une instruction qui traite la donnée Dⱼ, le module 28 procède à des opérations 284 et 286. Le module 28 identifie que la prochaine instruction à exécuter va traiter la donnée Dⱼ car cette instruction comporte généralement un opérande qui identifie le registre Rⱼ dans lequel est enregistré la donnée Dⱼ. Les opérations 284 et 286 sont identiques, respectivement, aux opérations 180 et 182 du procédé de la figure 7, sauf qu'ici c'est la donnée Dⱼ et le code ECC_{Dj} qui sont utilisés et non pas l'instruction masquée Iⱼ^{M} et le code ECC_{ljM}.

Ensuite, à l'issue de l'opération 286 ou si aucune erreur n'a été détectée lors de l'opération 284, l'unité 10 exécute l'instruction qui traite la donnée Dⱼ.

Le procédé de sécurisation des données décrit ici présente en outre les mêmes avantages que ceux présentés au chapitre III notamment à cause du fait que la structure de la ligne LDⱼ est identique à celle de la ligne LIⱼ.

### CHAPITRE V : REAGENCEMENT DE LA MEMOIRE PRINCIPALE

Généralement, le microprocesseur 2 exécute un système d'exploitation qui, en outre, optimise de temps en temps l'usage de la mémoire 4. A cet effet, il procédé à une phase 230 (Figure 10) de réagencement des lignes de la mémoire 4. Cette phase 230 va maintenant être décrite plus en détail en référence au procédé de la figure 10.

La phase 230 est typiquement exécutée en parallèle de l'exécution des autres programmes en cours d'exécution et, par exemple, au cours de l'exécution du code machine 32. Lors de cette phase 230, des lignes enregistrées dans la mémoire 4 sont déplacées d'une première adresse vers une seconde adresse différente. Typiquement, dans le contexte où un mécanisme de mémoire virtuelle paginée est mis en œuvre, les lignes sont déplacées par page entière. On rappelle que lorsqu'un mécanisme de mémoire virtuelle est mis en œuvre, il existe une table, connue sous le nom de "table des pages", qui associe à chaque adresse virtuelle de l'espace mémoire d'un programme en cours d'exécution, une adresse physique dans la mémoire 4. Ainsi, chaque adresse virtuelle correspond à une adresse physique et vice-versa. Il existe aussi un module, connu sous l'acronyme MMU ("Memory Management Unit"), qui est chargé de gérer et, en particulier, de mettre à jour automatiquement la table des pages dès que des lignes sont déplacées de manière à conserver la correspondance entre les adresses virtuelles et les adresses physiques.

Lors de ces opérations de déplacement de lignes de la mémoire 4, toutes les lignes déplacées sont traitées de la même façon. Plus précisément, toutes les lignes déplacées sont traitées comme s'il s'agissait de lignes de donnée. Ainsi, lors de la phase 230, si des lignes d'instructions doivent être déplacées, celles-ci sont lues et écrites en mettant en œuvre le procédé de la figure 9. Autrement dit, chaque ligne d'instruction est chargée en réponse à l'exécution par l'unité 10 d'une instruction de chargement et non pas parce que l'adresse contenue dans le compteur ordinal 26 correspond à cette ligne d'instruction. Par conséquent, le chargement d'une ligne d'instruction lors de la phase 230 ne déclenche pas l'exécution de l'instruction chargée par l'unité 10. Dès lors, par la suite, les étapes mises en œuvre pour déplacer une ligne de la mémoire 4 sont décrites en utilisant les notations introduites pour les lignes de données. Toutefois, ces étapes s'appliquent aussi bien au cas d'une ligne de donnée que d'une ligne d'instruction. Dans le cas d'une ligne d'instruction, l'instruction masquée Iⱼ^{M} est traitée comme étant une donnée.

Les étapes de la phase 230 sont décrites ci-dessous dans le cas particulier du déplacement d'une donnée DI d'une adresse @₁ vers une adresse @₂. Toutefois, ce qui est décrit dans ce cas particulier s'applique à toutes les lignes déplacées pendant la phase 230.

Lors d'une étape 232, une instruction de chargement de la ligne LD₁ enregistrée à l'adresse @₁ est exécutée par l'unité 10. Cette instruction de chargement est une instruction de chargement d'une donnée. Elle est donc exécutée comme décrit en référence à procédé de la figure 9. A cette occasion les opérations 270, 276, 278, 280 et, éventuellement, l'opération 274, sont d'abord exécutées pour enregistrer la donnée DI et son code ECC_{DI} dans une registre R₁ de l'ensemble 12.

Ensuite, lors d'une étape 234, une instruction d'enregistrement de la donnée DI à l'adresse @₂ est exécutée par l'unité 10. Cela déclenche alors successivement :
- l'exécution de l'opération 284 de vérification du code ECC_{DI} et, éventuellement, de l'opération 286 de correction de la donnée DI à l'aide du code ECC_{DI}, puis
- l'exécution de l'opération 254 de construction et d'enregistrement d'une nouvelle ligne LD₂ contenant le cryptogramme de la donnée DI obtenu à partir de l'adresse @₂.

En absence d'attaque et lors d'un fonctionnement normal, les étapes 232 et 234 peuvent être appliquées aux lignes d'instruction sans que cela déclenche systématiquement le signalement d'une faute d'exécution. En effet, à l'exception du fait que dans le cas particulier d'une ligne d'instruction la donnée est l'instruction masquée Iⱼ^{M}, les lignes d'instruction et de donnée sont construites de la même façon.

### CHAPITRE VI : GENERATION DU CODE BINAIRE

La figure 11 représente un compilateur 300 apte à générer automatiquement le code binaire 30 à partir d'un code source 302. À cet effet, le compilateur 300 comporte typiquement un microprocesseur 304 programmable et une mémoire 306. La mémoire 306 contient les instructions et les données nécessaires pour, lorsqu'elles sont exécutées par le microprocesseur 304, générer automatiquement le code binaire 30 à partir du code source 302. En particulier, lors de la compilation du code source 302, le microprocesseur 304 génère automatiquement les masques Mₖ appropriés et les lignes de code LIⱼ et LDⱼ. Lors de cette compilation, le compilateur 300 introduit également automatiquement dans le code machine les instructions précédemment décrites pour la mise en œuvre des procédés des figures 7 et 9. La conception et la réalisation d'un tel compilateur sont à la portée de l'homme du métier à partir des explications données dans cette description. Par exemple, pour cela, le compilateur 30 repère et identifie automatiquement les instructions de branchement et, en fonction de l'instruction de branchement identifiée, introduit automatiquement avant et/ou après les instructions nécessaires pour la mise en œuvre des procédés décrits ici.

### CHAPITRE VII : VARIANTES :

### Variantes de l'appareil 1 :

D'autres modes de réalisation de l'appareil 1 sont possibles. En particulier, toutes les variantes décrites dans les paragraphes 191 à 194 de la demande EP3457620A1 sont applicables ici.

Dans un autre mode de réalisation, le module 28 est remplacé par un module logiciel qui, lorsqu'il est exécuté par l'unité 10, réalise les mêmes fonctions et opérations que celles décrites pour le module 28.

### Variantes de la sécurisation du code machine :

En variante, l'utilisation du masque dérivé Mⱼ à la place du masque Mₖ est omise. Dans ce cas, chaque instruction masquée Iⱼ^{M} est obtenue directement et seulemnet à partir du masque Mₖ. Par exemple, l'instruction masquée Iⱼ^{M} est obtenue à l'aide de la relation suivante : Iⱼ^{M} = Iⱼ XOR Mₖ. Ainsi, la fonction d'évolution Fₑ peut être omise dans ce mode de réalisation puisqu'elle n'est plus utilisée.

De nombreux modes de réalisation sont possibles pour construire l'instruction masquée Iⱼ^{M} à partir de l'instruction Iⱼ et du masque dérivé Mⱼ. Par exemple, à cet effet, une fonction de chiffrement peut être utilisée. Dans ce cas, l'instruction masquée Iⱼ^{M} est obtenue à l'aide de la relation suivante : Iⱼ^{M} = Fₘ(Iⱼ, Mⱼ), où Fₘ est une fonction de chiffrement correspondant à une fonction Fₘ⁻¹ préprogrammée dans le module 28 et permettant de déchiffrer l'instruction masquée Iⱼ^{M}. Par exemple, la fonction Fₘ est identique à la fonction Fₖₐ ou à la fonction Fᵢᵥ. Dans une autre variante, la fonction Fₘ est un générateur pseudo-aléatoire initialisé avec la valeur du masque Mₖ au début de l'exécution du bloc BBₖ. Dans, ce cas, à chaque exécution de la fonction Fₘ, celle-ci génère un nouveau masque Mⱼ différent du précédent.

Dans un autre mode de réalisation, seule la structure du deuxième type décrite en référence à la figure 5 est utilisée pour tous les blocs de base du code machine 32. Dans ce cas, ce qui a précédemment été décrit dans le cas particulier des branchements indirects et aussi mis en œuvre pour les branchements directs.

D'autres modes de réalisation du contenu de la première ligne d'un bloc BBₖ du deuxième type sont possibles. Par exemple, ce contenu n'est pas nécessairement chiffré. Dans une autre variante, ce contenu est chiffrée en utilisant une autre clé que l'adresse @ₖ de la première ligne. Par exemple, le contenu de la première ligne est seulement chiffré avec la clé ka. Le contenu de la première ligne peut aussi contenir, à la place du cryptogramme Mₖ*, un cryptogramme @_{lsbi}* d'une adresse @_{lsbi}. Dans ce cas, lorsque l'instruction "LoadIV ra" ou "LoadIV rd" est exécutée, elle provoque la lecture et le déchiffrement du cryptogramme @_{lsbi}* pour obtenir l'adresse @_{lsbi}. Ensuite, le contenu à partir duquel sont construits les 32 bits du masque Mₖ est lu à l'adresse @_{lsbi}.

D'autres modes de réalisation sont possibles pour obtenir le masque Mₖ à partir de l'adresse @ₖ. Par exemple, une table d'association est chargée dans la mémoire 29 avant ou au début de l'exécution du code 32. Cette table associe à chaque adresse @ₖ d'un bloc BBₖ du deuxième type, le contenu qui permet de construire les 32 bits du masque Mₖ. Par exemple, ce contenu est identique à celui décrit dans le cas où il est enregistré dans la première ligne du bloc de base du deuxième type. Le fonctionnement de ce mode de réalisation est identique à celui précédemment décrit sauf que l'instruction "LoadIV ra" ou "LoadIV rd" provoque, lorsqu'elle est exécutée par le microprocesseur 2, l'obtention du masque Mₖ à partir du contenu de la table d'association et non pas à partir du contenu de la première ligne du bloc de base BBₖ. Dans ce cas, les blocs de base du deuxième type sont remplacés par des blocs de base du premier type et l'instruction "BranchIV rd" ou "BranchIV ra" est modifiée pour provoquer un saut vers la première ligne du bloc de base suivant et non pas vers la deuxième ligne de ce bloc de base.

En variante, certaines fonctions ou parties du code binaire 30 ne sont pas sécurisées. Dans ce cas, l'exécution d'un tel code binaire est réalisée, par exemple, comme décrit dans les paragraphes 195 à 197 de la demande EP3457620A1.

### Variantes communes à la sécurisation du code machine et des données :

Dans ce chapitre, toutes les variantes décrites s'appliquent aussi bien à une ligne d'instruction qu'à une ligne de donnée. Dans la suite de ce chapitre, ces variantes sont décrites en utilisant les notations définies pour une ligne de donnée. Toutefois, le choix inverse aurait pu être fait.

Il n'est pas nécessaire de construire le vecteur ivⱼ en utilisant les contenus des registres iv_{msbd} et iv_{cted}. Par exemple, en variante, les contenus des registres iv_{msbd} et iv_{cted} sont construits à partir du contenu du registre iv_{lsbd}. Par exemple, le vecteur ivⱼ codé sur 128 bits est obtenu en concaténant les 32 bits du registre iv_{lsbd} quatre fois avec eux-mêmes. Dans ce cas, les registres iv_{msbd} et iv_{cted} peuvent être omis.

Les différentes variantes décrites dans le chapitre "Variantes de la sécurisation des données" de la demande EP3457620A1 sont applicables dans le contexte de la présente demande. En particulier, le code ECC_{Dj} peut être remplacé par un simple code détecteur d'erreur permettant seulement de détecter une erreur dans la donnée Dⱼ avec laquelle il est concaténé. Un code détecteur d'erreur ne permet pas de corriger l'erreur détectée. Dans ce cas, les opérations 182 et 286 de correction de l'erreur sont omises.

Dans une variante simplifiée, le code ECC_{Dj} est omis. Dans ce mode de réalisation, le microprocesseur 2 n'est plus capable de détecter une erreur dans le déchiffrement du cryptogramme CDⱼ* ou une modification de la donnée Dⱼ qui interviendrait après son déchiffrement et avant son utilisation par l'unité 10. Dans ce cas, les opérations 180, 182, 284 et 286 sont omises.

Le code ECC_{Lj} peut être remplacé par un simple code détecteur d'erreur Dans ce cas, les opérations 174 et 274 de correction sont omises.

Dans une autre variante, le code ECC_{Lj} est construit de manière à permettre seulement la détection d'une erreur, soit seulement dans le cryptogramme CDⱼ* soit seulement dans le code MACⱼ.

Le code ECC_{Lj} peut être omis. Dans ce cas, une erreur dans le cryptogramme CDⱼ* ou dans le code MACⱼ ne peut être détectée que lors de l'exécution de l'opération 176, 276 de vérification de l'intégrité et de l'authenticité du cryptogramme. La détection d'une erreur à l'aide d'un code MAC est généralement plus complexe qu'à l'aide d'un simple code détecteur d'erreur ou d'un simple code correcteur d'erreur. De plus, lorsque le code ECC_{Lj} est omis, dans le cas où il existe une erreur dans le cryptogramme CIⱼ* ou le code MACⱼ, il n'est pas possible de corriger cette erreur. Dans ce dernier cas, par exemple, l'exécution de la fonction sécurisée est donc systématiquement interrompue en cas d'erreur.

Dans un autre mode de réalisation, c'est le code MACⱼ qui est omis. L'opération 176, 276 est alors également omise.

En variante, la fonction Fᵢᵥ est identique à la fonction fₖₐ sauf qu'elle est appliquée à l'adresse @ⱼ. La fonction Fᵢᵥ peut aussi utiliser le même algorithme de chiffrement que la fonction fₖₐ mais avec une clé de chiffrement différente de la clé ka.

Dans une variante simplifiée, la fonction Fᵢᵥ est la fonction identité. Dans ce cas, les contenus du registre iv_{lsbd} est systématiquement égal à l'adresse @ⱼ.

Dans les modes de réalisation décrits jusqu'à présent, à la fois la donnée Dⱼ et le code ECC_{Dj} sont chiffrés en fonction du vecteur ivⱼ. En variante, soit seulement la donnée Dⱼ soit seulement le code ECC_{Dj} est chiffré en fonction du vecteur ivⱼ. Par exemple, dans la ligne de donnée, le cryptogramme de la donnée Dⱼ est obtenu à partir d'une fonction de chiffrement qui n'utilise pas le vecteur ivⱼ, tandis que le cryptogramme ECC_{Dj}* du code ECC_{Dj} est obtenu à l'aide de la fonction de chiffrement fₖₐ(ECC_{Dj} ; ivⱼ). Dans ce cas, lors de l'opération 278, le module 28 déchiffre le cryptogramme de la donnée Dⱼ sans utiliser le vecteur ivⱼ et déchiffre le cryptogramme ECC_{Dj}* en utilisant ce vecteur ivⱼ. Ensuite, le reste du procédé est identique à ce qui a déjà été décrit. Dans un mode de réalisation simplifié, puisque la donnée Dⱼ n'a pas besoin d'être chiffrée en fonction du vecteur ivⱼ, il est aussi possible de ne pas la chiffrer. Par exemple, la ligne de code contient alors la donnée Dⱼ en clair et le cryptogramme ECC_{Dj}*. Dès lors, lors de l'opération 278, le déchiffrement de la donnée Dⱼ est omis puisqu'il suffit de l'extraire de la plage de bits dans laquelle elle est contenue dans la ligne LDⱼ.

A l'inverse, il est aussi possible de modifier la structure des lignes LDⱼ de manière à ce que seule la donnée Dⱼ soit chiffrée en fonction du vecteur ivⱼ. Par exemple, la ligne LDⱼ comporte un cryptogramme Dⱼ* de la donnée Dⱼ obtenue en la chiffrant à l'aide de la fonction fₖₐ(Dⱼ ; ivⱼ) et un cryptogramme ECC_{Dj}* obtenu en chiffrant le code ECC_{Dj} à l'aide d'une fonction de chiffrement indépendante du vecteur ivⱼ. Lors de l'opération 278, le module 28 déchiffre le cryptogramme Dⱼ* à l'aide du vecteur ivⱼ et déchiffre le cryptogramme ECC_{Dj}* sans utiliser ce vecteur ivⱼ.

En variante, l'opération 176 ou 276 se poursuit systématiquement par l'opération 178 ou 278 même si l'intégrité ou l'authenticité du cryptogramme n'a pas pu être confirmée. Dans ce cas, l'opération 176 ou 276 sert à déclencher le signalement d'une faute d'exécution sans interrompre l'exécution du code binaire.

A partir du moment où une ligne de code comporte au moins un des éléments du groupe composé d'un code d'authentification de message, d'un code correcteur d'erreur et d'un code détecteur d'erreur, il est possible de détecter une modification du contenu de cette ligne. Ainsi, pour détecter une modification du contenu d'une ligne d'instruction ou d'une ligne de donnée, un seul quelconque des éléments de ce groupe est nécessaire.

De nombreux modes de réalisation de la fonction fₖₐ sont possibles. Par exemple, la fonction fₖₐ peut être aussi simple qu'une simple opération « OU Exclusif » logique entre la donnée Dⱼ et le vecteur ivⱼ ou entre le code ECC_{Dj} et le vecteur ivⱼ.

Le chiffrement et le déchiffrement ont été décrits dans le cas particulier où les fonctions fₖₐ et fₖₐ⁻¹ sont des algorithmes de chiffrement qui utilisent un "vecteur d'initialisation" et, de préférence, aussi une clé secrète ka. Toutefois, les fonctions fₖₐ et fₖₐ⁻¹ peuvent aussi être des algorithmes de chiffrement/déchiffrement dans lesquels un vecteur d'initialisation n'est pas nécessaire. Toutefois, tout ce qui a été décrit ici s'applique à l'identique à un tel algorithme de chiffrement/déchiffrement en remplaçant simplement le terme "vecteur d'initialisation" par le terme "clé".

Dans une autre variante, les clés ka et k' sont les mêmes.

### Variantes communes aux différents chapitres précédents

Ce qui a été décrit ici s'applique aussi dans un contexte où aucun mécanisme de mémoire virtuelle n'est implémenté. Dans ce cas, aucune adresse virtuelle n'est utilisée et seule les adresses physiques sont utilisées.

La clé ka peut être pré-enregistrée dans la mémoire 29. Dans ce cas, le cryptogramme ka* peut être omis du bloc 34.

Le cryptogramme k'* de la clé k' chiffrée avec la clé publique pk_{CPU} peut être enregistré dans le bloc 34. Dans ce cas, la clé k' n'a pas besoin d'être pré-enregistrée dans la mémoire 29.

Une ligne de code peut être plus longue qu'un mot-machine. Dans ce cas, chaque ligne de code se compose de plusieurs mots-machine généralement situés à des adresses mémoires immédiatement consécutives dans la mémoire 4. Dans ce cas, une ligne de code est chargée dans le microprocesseur 2 non pas en une seule opération de lecture, mais en exécutant plusieurs opérations de lecture. Chaque opération de lecture charge dans le microprocesseur un mot-machine respectif de la ligne de code.

Selon le jeu d'instructions utilisé par le microprocesseur 2, les instructions décrites telles que "LoadIV", "BranchIV" correspondent chacune à une seule instruction de ce jeu ou, au contraire, à un groupe de plusieurs instructions de ce jeu.

Tous les modes de réalisation décrits dans ce texte et, en particulier, les différentes variantes, peuvent être combinés entre eux.

L'utilisation de la fonction Fₑ pour obtenir un masque dérivé Mⱼ à partir du masque Mₖ peut être mis en œuvre indépendamment du fait que les lignes d'instruction et de donnée sont construites de la même façon. Par exemple, l'utilisation de la fonction Fₑ peut être implémentée dans les modes de réalisation de la demande EP3457620A1 pour obtenir un vecteur d'initialisation dérivé à partir du vecteur d'initialisation ivₖ associé au bloc BBₖ pour chaque instruction de ce bloc BBₖ. Ensuite, chaque instruction du bloc BBₖ est déchiffrée en utilisant le vecteur d'initialisation dérivé obtenu pour la ligne d'instruction contenant cette instruction au lieu d'utiliser directement le vecteur ivₖ associé à ce bloc BBₖ.

### CHAPITRE IX : AVANTAGES DES MODES DE RÉALISATION DÉCRITS :

Puisque le chargement du masque Mₖ nécessaire au déchiffrement des lignes d'instructions du bloc de base BBₖ est déclenché lors de l'exécution du bloc de base BBₖ₋₁, le procédé est plus robuste vis-à-vis des tentatives de détournement du flot de contrôle. En effet, si suite à l'exécution du bloc de base BBₖ₋₁, c'est un bloc de base BBₜ qui est exécuté au lieu du bloc de base BBₖ alors les lignes d'instruction du bloc BBₜ sont déchiffrées à l'aide du masque Mₖ chargé. Les lignes d'instruction du bloc BBₜ ne sont donc pas déchiffrées à l'aide du masque Mₜ associé à ce bloc BBₜ. Ainsi, le déchiffrement des lignes d'instruction du bloc BBₜ est incorrect, ce qui déclenche une faute d'exécution. Il est donc difficile de détourner le flot d'exécution du bloc BBₖ vers le bloc BBₜ.

De plus, puisque les lignes d'instruction sont construites comme les lignes de données, celles-ci peuvent être chargées comme des lignes de données sans que cela provoque systématiquement le déclenchement du signalement d'une faute d'exécution. Dès lors, le déplacement des lignes d'instruction lors de la phase 230 de réagencement est possible.

Enfin, si une ligne d'instruction est déplacée dans la mémoire principale sans que ce déplacement soit exécuté par le microprocesseur 2, cela provoque aussi le signalement d'une faute d'exécution.

La phase de réagencement de la mémoire principale permet d'optimiser le fonctionnement de la mémoire principale et aussi, par exemple, de libérer de la place dans la mémoire principale pour lancer l'exécution d'un programme supplémentaire en parallèle de l'exécution du code machine 32.

Le fait de vérifier, lors de l'opération 180, que la ligne d'instruction chargée à bien été construite à l'aide du vecteur d'initialisation ivⱼ associé, par la fonction Fᵢᵥ, à l'adresse @ⱼ désignée par le compteur ordinal, permet de s'assurer qu'une ligne d'instruction n'a pas été déplacée sans avoir à traiter cette ligne d'instruction comme une ligne de donnée.

L'utilisation de la fonction d'évolution Fₑ permet d'obtenir un masque Mⱼ différent du masque Mⱼ₋₁ utilisé pour déchiffrer la précédente instruction et cela même si la précédente instruction est située à l'intérieur du même bloc de base BBₖ. Grace à cela, si un attaquant arrive à provoquer un branchement non pas au début du bloc BBₖ mais sur une ligne LIⱼ située au milieu du bloc BBₖ, alors l'instruction contenue dans cette ligne LIⱼ ne peut pas être déchiffrée correctement. En effet, dans ce cas, la fonction Fₑ n'a pas été exécutée pour les précédentes instructions de ce bloc BBₖ. Par conséquent, lorsque la fonction Fₑ est exécutée pour la première fois pour la ligne LIⱼ, le masque dérivé Mⱼ obtenu est différent de celui qui aurait été obtenu si la fonction Fₑ avait été exécutée pour chacune des précédentes lignes d'instruction du bloc BBₖ. Ainsi, le masque dérivé Mⱼ obtenu n'est pas correct et cela même si le masque Mₖ à partir duquel est construit le masque Mⱼ est correct. Cela rend beaucoup plus difficile les attaques qui détournent le flot de contrôle, non pas vers un autre bloc BBₜ, mais vers le bon bloc BBₖ mais en sautant les premières lignes d'instruction de ce bloc BBₖ.

L'instruction de chargement indirect ne contient pas directement la valeur du masque Mₖ mais seulement l'identifiant d'un registre destiné à contenir l'adresse @ₖ du bloc BBₖ. Ainsi, le bloc de base BBₖ₋₁ contient seulement des instructions qui permettent, au moment de l'exécution de ce bloc de base BBₖ₋₁, de construire ce masque Mₖ à partir du contenu du registre identifié. Dès lors, le bloc de base BBₖ₋₁ peut être compilé indépendamment du bloc de base suivant BBₖ. Grâce à cela, l'utilisation d'un branchement indirect à la fin d'un bloc de base est rendue possible tout en conservant la possibilité de contrôler et de garantir l'intégrité du flot de contrôle.

Le fait d'enregistrer le contenu à charger pour construire le masque Mₖ dans la première ligne du bloc de base BBₖ du deuxième type permet de charger simplement ce contenu dans le microprocesseur. De plus, l'introduction d'une telle première ligne de donnée lors de la génération du code machine est simple.

Le chiffrement des instructions Iⱼ permet de garantir la confidentialité du code binaire 30, ce qui rend le « Reverse Engineering » du code binaire très difficile. La vérification de l'intégrité du cryptogramme CIⱼ* ou CDⱼ* permet de détecter les modifications du code binaire provoquées, par exemple, par des attaques telles que l'injection de fautes dans la mémoire 4. Le fait de vérifier l'authenticité des instructions et des données permet de détecter et de rendre très difficile l'ajout d'instructions supplémentaires dans le code binaire 30 par un attaquant, par exemple, pour y introduire des logiciels malveillants tels que des virus. En effet, même si l'attaquant connaît l'algorithme utilisé pour chiffrer les instructions Iⱼ et les données Dⱼ, il ne connaît pas la clé secrète k' utilisée pour construire le code MACⱼ.

Le fait que le code ECC_{ljM}, ECCₗⱼ ou ECC_{Dj} soit un code correcteur d'erreur et pas seulement un code détecteur d'erreur, permet de rendre le procédé d'exécution plus robuste vis-à-vis des attaques par injection de fautes. En effet, dans ce cas, le code correcteur d'erreur permet souvent de corriger l'erreur introduite dans l'instruction Iⱼ ou dans la donnée Dⱼ de sorte que malgré la présence de telles erreurs, la fonction sécurisée continue de s'exécuter correctement.

L'utilisation du code ECC_{Lj} permet de détecter plus rapidement une erreur dans le cryptogramme CIⱼ* ou CDⱼ* ou dans le code MACⱼ que si seul le code MACⱼ était utilisé pour cela. L'utilisation du code ECC_{Lj} permet donc d'accélérer l'exécution du code binaire.

L'utilisation d'un code correcteur d'erreur pour le code ECC_{Lj} permet de rendre le procédé revendiqué plus robuste vis-à-vis des attaques par injection de fautes dans la mémoire 4 ou dans le support 6. En effet, dans ce cas, le code correcteur d'erreur permet souvent de corriger le cryptogramme CIⱼ* ou CDⱼ* ou le code MACⱼ de sorte que malgré la présence de telles erreurs, la fonction sécurisée s'exécute correctement.

## Revendications

1. Procédé d'exécution d'un code binaire d'une fonction sécurisée par un microprocesseur, ce procédé comportant les étapes suivantes :
a) la fourniture (150) du code binaire, le code binaire fourni comportant un code machine contenant une succession de blocs de base dans lequel :
- chaque bloc de base comporte une succession de ligne d'instructions contenant chacune un cryptogramme d'une instruction, les instructions codées dans ces lignes d'instructions successives étant destinées à être exécutées par le microprocesseur systématiquement dans l'ordre où elles apparaissent dans ce bloc de base,
- chaque bloc de base débute à une adresse de branchement et se termine par une ligne d'instruction contenant le cryptogramme d'une instruction de branchement vers une adresse de branchement d'un autre bloc de base, cet autre bloc de base étant appelé « le bloc de base suivant» et le bloc de base qui se termine par la ligne d'instruction contenant le cryptogramme de cette instruction de branchement vers ce bloc de base suivant étant appelé « le bloc de base précédent »,
- le cryptogramme contenu dans chaque ligne d'instruction chiffrée d'un bloc de base est fonction d'un masque associé à ce bloc de base, ce masque étant différent des masques associés aux autres blocs de base,
- chaque bloc de base précédent contient une ligne d'instruction contenant le cryptogramme d'une instruction de chargement d'un masque qui, lorsqu'elle est exécutée par le microprocesseur, provoque le chargement, dans le microprocesseur, du masque à utiliser pour obtenir une instruction à partir du cryptogramme de chaque ligne d'instruction du bloc de base suivant,
b) l'exécution (152) du code binaire par le microprocesseur, lors de cette exécution le procédé comporte :
- l'enregistrement de données dans la mémoire principale, pour chaque donnée à enregistrer, le procédé comportant :
• l'exécution (254) d'un algorithme de construction d'une ligne de donnée contenant un cryptogramme de cette donnée construit à l'aide d'un vecteur d'initialisation ivⱼ associé à une adresse @ⱼ de la mémoire principale par une relation ivⱼ = Fᵢᵥ(@ⱼ), où la fonction Fᵢᵥ est une fonction préprogrammée qui associe un vecteur d'initialisation ivⱼ différent à chaque adresse @ⱼ différente de la mémoire principale, puis
• l'enregistrement, dans la mémoire principale, de cette ligne de donnée construite à l'adresse @ⱼ,
- l'exécution, par l'unité arithmétique et logique, d'une instruction de chargement de la ligne de donnée, cette instruction de chargement comportant un opérande à partir duquel est obtenu l'adresse @ⱼ où est enregistrée la ligne de donnée à charger depuis la mémoire principale, suivie de la vérification (284) que la ligne de donnée chargée a bien été construite à l'aide du vecteur d'initialisation ivⱼ associé à cette adresse @ⱼ par la fonction Fᵢᵥ, et lorsque cette vérification échoue, le déclenchement (172) du signalement d'une faute d'exécution et, lorsque cette vérification réussie l'inhibition de ce signalement d'une faute d'exécution,
- l'exécution de blocs de base précédent et suivant et lors de l'exécution de chaque instruction du bloc de base suivant :
• le chargement, à partir de la mémoire principale, de la ligne d'instruction désignée par un compteur ordinal du microprocesseur, suivi du déchiffrement (178, 184) du cryptogramme contenu dans la ligne d'instruction chargée en utilisant le masque chargé dans le microprocesseur lors de l'exécution du bloc de base précédent, puis
• l'exécution (190), par une unité arithmétique et logique du microprocesseur, de l'instruction déchiffrée,
**caractérisé en ce que** chaque ligne d'instruction d'un bloc de base est construite (150) en exécutant le même algorithme de construction que celui exécuté pour construire la ligne de donnée et en utilisant la même fonction Fᵢᵥ, la donnée étant prise égale pour cela à l'instruction masquée à l'aide du masque associé à ce bloc de base, de sorte que le chargement de cette ligne d'instruction par l'exécution d'une instruction de chargement d'une ligne de donnée ne déclenche pas systématiquement le signalement d'une faute d'exécution.

2. Procédé selon la revendication 1, dans lequel le procédé comporte une phase (230) de réagencement de la mémoire principale lors de laquelle des lignes d'instructions sont déplacées dans la mémoire principale, cette phase de réagencement de la mémoire principale comportant pour chaque ligne d'instruction déplacée :
- l'exécution (232), par l'unité arithmétique et logique, d'une instruction de chargement d'une ligne de donnée dans laquelle l'adresse obtenue à partir de l'opérande est l'adresse @ⱼ₁ de la ligne d'instruction à déplacer, puis
- la vérification (284), de la même manière que pour toute ligne de donnée chargée, que la ligne d'instruction ainsi chargée à bien été construite à l'aide du vecteur d'initialisation ivⱼ₁ associé, par la fonction Fᵢᵥ, à l'adresse @ⱼ₁ obtenue à partir de l'opérande de l'instruction de chargement, et lorsque cette vérification échoue, le déclenchement du signalement d'une faute d'exécution et, lorsque cette vérification réussie, l'inhibition de ce signalement d'une faute d'exécution.

3. Procédé selon l'une quelconque des revendications précédentes, dans lequel, lors de l'étape b), le chargement de la ligne d'instruction désignée par le compteur ordinal du microprocesseur, est également systématiquement suivi par la vérification (180), de la même manière que pour la ligne de donnée, que la ligne d'instruction chargée à bien été construite à l'aide du vecteur d'initialisation ivⱼ associé, par la fonction Fᵢᵥ, à l'adresse @ⱼ désignée par le compteur ordinal, et lorsque cette vérification échoue, le déclenchement du signalement d'une faute d'exécution et, lorsque cette vérification réussie, l'inhibition de ce signalement d'une faute d'exécution.

4. Procédé selon l'une quelconque des revendications précédentes, dans lequel le déchiffrement du cryptogramme contenu dans la ligne d'instruction chargée comporte :
- un déchiffrement (178) du cryptogramme à l'aide du vecteur d'initialisation ivⱼ associé, par la fonction Fᵢᵥ, à l'adresse @ⱼ désignée par le compteur ordinal pour obtenir une instruction masquée déchiffrée,
- l'exécution (184) d'une fonction prédéterminée d'évolution pour obtenir un masque dérivé du masque chargé, le masque dérivé obtenu étant différent à chaque exécution de cette fonction d'évolution, puis
- un déchiffrement (184) de l'instruction masquée déchiffrée à l'aide du masque dérivé obtenu pour obtenir l'instruction déchiffrée exécutée par l'unité arithmétique et logique.

5. Procédé selon la revendication 4, dans lequel la fonction d'évolution est choisie dans le groupe composé :
- d'une fonction de permutation,
- d'un registre à décalage à rétroaction linéaire,
- d'un chiffrement pas flot,
- d'une combinaison bit-à-bit entre les bits du masque chargé et des bits susceptibles de varier à chaque exécution d'une précédente instruction du même bloc de base, et
- d'une composition d'une ou plusieurs des fonctions précédentes.

6. Procédé selon la revendication 5, dans lequel les bits susceptibles de varier à chaque exécution d'une précédente instruction du même bloc de base sont choisis dans le groupe composé :
- des bits d'une précédente instruction du même bloc de base, et
- des bits de contrôle de l'exécution d'une précédente instruction du même bloc de base, ces bits de contrôle étant des bits distincts des bits des instructions et mis à jour par le microprocesseur à chaque exécution d'une instruction.

7. Procédé selon l'une quelconque des revendications précédentes, dans lequel :
- chaque exécution (252, 254) de l'algorithme de construction d'une ligne de donnée à enregistrer à une adresse @ⱼ comporte :
• le calcul d'un vecteur d'initialisation ivⱼ à l'aide de la relation ivⱼ = Fᵢᵥ(@ⱼ), où @ⱼ est l'adresse à laquelle la ligne de donnée doit être enregistrée dans la mémoire principale,
• la construction d'un code détecteur d'erreur permettant de détecter une erreur dans la donnée,
• la concaténation du code détecteur d'erreur construit avec la donnée pour obtenir une concaténation CDⱼ, puis
• le chiffrement de la concaténation CDⱼ à l'aide du vecteur d'initialisation ivⱼ calculé pour obtenir le cryptogramme de la donnée, puis
• l'incorporation du cryptogramme de la donnée dans la ligne de donnée construite,
- chaque vérification que la ligne de donnée chargée a bien été construite à l'aide du vecteur d'initialisation ivⱼ associé, par la fonction Fᵢᵥ, à une adresse @ⱼ à partir de laquelle cette ligne de donnée a été chargée, est précédée par les opérations suivantes :
• le calcul (278) d'un vecteur d'initialisation ivⱼ à l'aide de la relation ivⱼ = Fᵢᵥ(@ⱼ), où @ⱼ est l'adresse à partir de laquelle la ligne de donnée a été chargée depuis la mémoire principale, puis
• le déchiffrement (278) du cryptogramme de la donnée contenue dans la ligne de donnée chargée à l'aide du vecteur d'initialisation ivⱼ calculé pour obtenir une concaténation déchiffrée, puis
- chaque vérification (284) que la ligne de donnée chargée a bien été construite à l'aide du vecteur d'initialisation ivⱼ associé, par la fonction Fᵢᵥ, à une adresse @ⱼ à partir de laquelle cette ligne de donnée a été chargée, comporte :
• l'utilisation du code détecteur d'erreur contenu dans la concaténation déchiffrée, pour détecter une erreur dans la donnée contenue dans cette concaténation déchiffrée, et
• si une erreur est détectée, la vérification que la ligne de donnée chargée a bien été construite à l'aide du vecteur d'initialisation ivⱼ associé, par la fonction Fᵢᵥ, à l'adresse @ⱼ à partir de laquelle cette ligne de donnée a été chargée, échoue et, dans le cas contraire, la vérification réussie.

8. Procédé selon les revendications 2 et 7 prises ensemble, dans lequel, la phase (230) de réagencement comporte également pour chaque ligne d'instruction chargée :
- le déchiffrement (278) du cryptogramme de la concaténation contenue dans la ligne d'instruction chargée pour obtenir une instruction masquée, puis
- l'exécution (254) de l'algorithme de construction d'une ligne de donnée avec une donnée égale à cette instruction masquée pour obtenir une nouvelle ligne d'instruction destinée à être enregistrée dans la mémoire principale à une adresse @ⱼ₂ différente de l'adresse @ⱼ₁, puis
- l'enregistrement (254), dans la mémoire principale, de la nouvelle ligne d'instruction construite à l'adresse @ⱼ₂.

9. Procédé selon l'une quelconque des revendications précédentes, dans lequel l'algorithme de construction construit le cryptogramme de la donnée également en utilisant une clef secrète indépendante de l'adresse @ⱼ.

10. Procédé selon l'une quelconque des revendications précédentes, dans lequel, lors de l'étape a), les blocs de base enregistrés comporte au moins un premier bloc (70, 82) de base précédent dans lequel :
- l'instruction de branchement est une instruction de branchement indirect, c'est-à-dire une instruction de branchement contenant un opérande qui identifie un registre de destination et qui, lorsqu'elle est exécutée par le microprocesseur, provoque un branchement directement vers la première ligne d'instruction chiffrée d'un bloc de base suivant dont l'adresse est obtenue à partir du contenu de ce registre de destination,
- l'instruction de chargement est une instruction de chargement indirect, c'est-à-dire une instruction de chargement contenant un opérande qui identifie le même registre de destination que celui identifié par l'opérande de l'instruction de branchement indirect et qui, lorsqu'elle est exécutée par le microprocesseur, provoque :
- la lecture d'une ligne de donnée associée à l'adresse obtenue à partir du contenu du registre de destination, puis
- la construction d'un masque à partir du contenu de cette ligne de donnée lue, puis
- le chargement de ce masque construit dans le microprocesseur,
- l'étape c) comporte en plus :
• l'exécution de l'instruction de chargement indirect du premier bloc de base précédent, puis
• l'exécution de l'instruction de branchement indirect du premier bloc de base précédent.

11. Procédé selon la revendication 10, dans lequel, la ligne de donnée associée à l'adresse obtenue à partir du contenu du registre de destination est la première ligne de chaque bloc de base suivant, cette ligne de donnée, contrairement à une ligne d'instruction, ne codant aucun opcode d'une instruction exécutable par le microprocesseur.

12. Code binaire d'une fonction sécurisée exécutable par un microprocesseur pour la mise en œuvre d'un procédé d'exécution conforme à l'une quelconque des revendications précédentes, dans lequel le code binaire comporte un code machine contenant une succession de blocs de base et dans lequel :
- chaque bloc de base comporte une succession de ligne d'instructions contenant chacune un cryptogramme d'une instruction, les instructions codées dans ces lignes d'instructions successives étant destinées à être exécutées par le microprocesseur systématiquement dans l'ordre où elles apparaissent dans ce bloc de base,
- chaque bloc de base débute à une adresse de branchement et se termine par une ligne d'instruction contenant le cryptogramme d'une instruction de branchement vers une adresse de branchement d'un autre bloc de base, cet autre bloc de base étant appelé « le bloc de base suivant» et le bloc de base qui se termine par la ligne d'instruction contenant le cryptogramme de cette instruction de branchement vers ce bloc de base suivant étant appelé « le bloc de base précédent »,
- le cryptogramme contenu dans chaque ligne d'instruction chiffrée d'un bloc de base est fonction d'un masque associé à ce bloc de base, ce masque étant différent des masques associés aux autres blocs de base,
- chaque bloc de base précédent contient une ligne d'instruction contenant le cryptogramme d'une instruction de chargement d'un masque qui, lorsqu'elle est exécutée par le microprocesseur, provoque le chargement, dans le microprocesseur, du masque à utiliser pour obtenir une instruction à partir du cryptogramme de chaque ligne d'instruction du bloc de base suivant,
- le code machine comporte aussi des instructions qui, lorsqu'elles sont exécutées par le microprocesseur, provoque :
- l'enregistrement de données dans la mémoire principale et pour chaque donnée à enregistrer :
▪ l'exécution d'un algorithme de construction d'une ligne de donnée contenant un cryptogramme de cette donnée construit à l'aide d'un vecteur d'initialisation ivⱼ associé à une adresse @ⱼ de la mémoire principale par une relation ivⱼ = Fᵢᵥ(@ⱼ), où la fonction Fᵢᵥ est une fonction préprogrammée qui associe un vecteur d'initialisation ivⱼ différent à chaque adresse @ⱼ différente de la mémoire principale, puis
▪ l'enregistrement, dans la mémoire principale, de cette ligne de donnée construite à l'adresse @ⱼ,
- l'exécution, par l'unité arithmétique et logique, d'une instruction de chargement de la ligne de donnée, cette instruction de chargement comportant un opérande à partir duquel est obtenu l'adresse @ⱼ où est enregistrée la ligne de donnée à charger depuis la mémoire principale, suivie de la vérification que la ligne de donnée chargée a bien été construite à l'aide du vecteur d'initialisation ivⱼ associé à cette adresse @ⱼ par la fonction Fᵢᵥ, et lorsque cette vérification échoue, le déclenchement du signalement d'une faute d'exécution et, lorsque cette vérification réussie l'inhibition de ce signalement d'une faute d'exécution,
- l'exécution de blocs de base précédent et suivant et lors de l'exécution de chaque instruction du bloc de base suivant :
• le chargement, à partir de la mémoire principale, de la ligne d'instruction désignée par un compteur ordinal du microprocesseur, suivi du déchiffrement du cryptogramme contenu dans la ligne d'instruction chargée en utilisant le masque chargé dans le microprocesseur lors de l'exécution du bloc de base précédent, puis
• l'exécution, par une unité arithmétique et logique du microprocesseur, de l'instruction déchiffrée,
**caractérisé en ce que** chaque ligne d'instruction d'un bloc de base est construite de la même manière que la ligne de donnée et en utilisant la même fonction Fᵢᵥ, la donnée étant égale pour cela à l'instruction masquée à l'aide du masque associé à ce bloc de base, de sorte que le chargement de cette ligne d'instruction par l'exécution d'une instruction de chargement d'une ligne de donnée ne déclenche pas systématiquement le signalement d'une faute d'exécution.

13. Support d'enregistrement d'informations, lisibles par un microprocesseur, **caractérisé en ce qu'**il comporte un code binaire conforme à la revendication 12.

14. Microprocesseur (2) pour la mise en œuvre d'un procédé conforme à l'une quelconque des revendications 1 à 11, ce microprocesseur étant configuré pour exécuter les étapes suivantes :
- l'enregistrement de données dans la mémoire principale et pour chaque donnée à enregistrer, exécuter les opérations suivantes :
• l'exécution d'un algorithme de construction d'une ligne de donnée contenant un cryptogramme de cette donnée construit à l'aide d'un vecteur d'initialisation ivⱼ associé à une adresse @ⱼ de la mémoire principale par une relation ivⱼ = Fᵢᵥ(@ⱼ), où la fonction Fᵢᵥ est une fonction préprogrammée qui associe un vecteur d'initialisation ivⱼ différent à chaque adresse @ⱼ différente de la mémoire principale, puis
• l'enregistrement, dans la mémoire principale, de cette ligne de donnée construite à l'adresse @ⱼ,
- l'exécution d'une instruction de chargement de la ligne de donnée, cette instruction de chargement comportant un opérande à partir duquel est obtenu l'adresse @ⱼ où est enregistrée la ligne de donnée à charger depuis la mémoire principale, suivie de la vérification que la ligne de donnée chargée a bien été construite à l'aide du vecteur d'initialisation ivⱼ associé à cette adresse @ⱼ par la fonction Fᵢᵥ, et lorsque cette vérification échoue, le déclenchement du signalement d'une faute d'exécution et, lorsque cette vérification réussie l'inhibition de ce signalement d'une faute d'exécution,
- l'exécution de blocs de base précédent et suivant et lors de l'exécution de chaque instruction du bloc de base suivant :
• le chargement, à partir de la mémoire principale, de la ligne d'instruction désignée par un compteur ordinal du microprocesseur, suivi du déchiffrement du cryptogramme contenu dans la ligne d'instruction chargée en utilisant le masque chargé dans le microprocesseur lors de l'exécution du bloc de base précédent, puis
• l'exécution, par une unité arithmétique et logique du microprocesseur, de l'instruction déchiffrée,
**caractérisé en ce que** le microprocesseur est également configuré pour exécuter le chargement d'une ligne d'instruction d'un bloc de base par l'exécution d'une instruction de chargement d'une ligne de donnée, chaque ligne d'instruction d'un bloc de base ayant été construite au préalable à cet effet en exécutant le même algorithme de construction que celui exécuté pour construire la ligne de donnée et en utilisant la même fonction Fᵢᵥ, la donnée étant prise égale pour cela à l'instruction masquée à l'aide du masque associé à ce bloc de base, de sorte que ce chargement ne déclenche pas systématiquement le signalement d'une faute d'exécution.

15. Compilateur (300) apte à transformer automatiquement un code source d'une fonction sécurisée en un code binaire de cette fonction sécurisée, **caractérisé en ce que** le compilateur est apte à transformer automatiquement le code source en un code binaire conforme à revendication 12.

## Patentansprüche

1. Verfahren zur Ausführung eines Binärcodes einer gesicherten Funktion durch einen Mikroprozessor, wobei dieses Verfahren die folgenden Schritte umfasst:
a) Bereitstellen (150) des Binärcodes, wobei der bereitgestellte Binärcode einen Maschinencode umfasst, der eine Folge von Basisblöcken enthält, wobei:
- jeder Basisblock eine Folge von Anweisungszeilen umfasst, die jeweils ein Kryptogramm einer Anweisung enthalten, wobei die in diesen aufeinanderfolgenden Anweisungszeilen codierten Anweisungen dazu bestimmt sind, durch den Mikroprozessor systematisch in der Reihenfolge, in der sie in diesem Basisblock auftreten, ausgeführt zu werden,
- jeder Basisblock an einer Verzweigungsadresse startet und mit einer Anweisungszeile, die das Kryptogramm einer Verzweigungsanweisung zu einer Verzweigungsadresse eines anderen Basisblocks enthält, endet, wobei dieser andere Basisblock "nachfolgender Basisblock" genannt wird und der Basisblock, der mit der Anweisungszeile, die das Kryptogramm dieser Verzweigungsanweisung zu diesem nachfolgenden Basisblock enthält, endet, "vorhergehender Basisblock" genannt wird,
- das Kryptogramm, das in jeder verschlüsselten Anweisungszeile eines Basisblocks enthalten ist, von einer mit diesem Basisblock assoziierten Maske abhängt, wobei sich diese Maske von den mit den anderen Basisblöcken assoziierten Masken unterscheidet,
- jeder vorhergehende Basisblock eine Anweisungszeile enthält, die das Kryptogramm einer Anweisung zum Laden einer Maske enthält, die, wenn sie durch den Mikroprozessor ausgeführt wird, bewirkt, dass die Maske, die zum Erhalten einer Anweisung mittels des Kryptogramms jeder Anweisungszeile des nachfolgenden Basisblocks zu verwenden ist, in den Mikroprozessor geladen wird,
b) Ausführen (152) des Binärcodes durch den Mikroprozessor, wobei das Verfahren bei dieser Ausführung Folgendes umfasst:
- Aufzeichnen von Datenelementen in dem Hauptspeicher, wobei das Verfahren für jedes aufzuzeichnende Datenelement Folgendes umfasst:
• Ausführen (254) eines Algorithmus zum Erstellen einer Datenelementzeile, die ein Kryptogramm dieses Datenelements enthält, das mit Hilfe eines Initialisierungsvektors ivⱼ, der durch eine Gleichung ivⱼ = Fᵢᵥ(@ⱼ) mit einer Adresse @ⱼ des Hauptspeichers assoziiert ist, erstellt wird, wobei die Funktion Fᵢᵥ eine vorprogrammierte Funktion ist, die jeder unterschiedlichen Adresse @ⱼ des Hauptspeichers einen unterschiedlichen Initialisierungsvektor ivⱼ zuordnet, und dann
• Aufzeichnen, in dem Hauptspeicher, dieser erstellten Datenelementzeile unter der Adresse @ⱼ,
- Ausführen, durch die arithmetisch-logische Einheit, einer Anweisung zum Laden der Datenelementzeile, wobei diese Ladeanweisung einen Operanden umfasst, mittels dessen die Adresse @ⱼ, unter der die aus dem Hauptspeicher zu ladende Datenelementzeile aufgezeichnet ist, erhalten wird, und anschließend Überprüfen (284), dass die geladene Datenelementzeile tatsächlich mit Hilfe des Initialisierungsvektors ivⱼ, der durch die Funktion Fᵢᵥ mit dieser Adresse @ⱼ assoziiert ist, erstellt wurde, und wenn diese Überprüfung fehlschlägt, Auslösen (172) der Signalisierung eines Ausführungsfehlers, und wenn diese Überprüfung erfolgreich ist, Unterdrücken dieser Signalisierung eines Ausführungsfehlers,
- Ausführen eines vorhergehenden und eines nachfolgenden Basisblocks, und bei der Ausführung jeder Anweisung des nachfolgenden Basisblocks:
• Laden, aus dem Hauptspeicher, der Anweisungszeile, die durch einen Programmzähler des Mikroprozessors bestimmt wird, und anschließend Entschlüsseln (178, 184) des Kryptogramms, das in der geladenen Anweisungszeile enthalten ist, unter Verwendung der Maske, die bei der Ausführung des vorhergehenden Basisblocks in den Mikroprozessor geladen wurde, und dann
• Ausführen (190), durch eine arithmetisch-logische Einheit des Mikroprozessors, der entschlüsselten Anweisung,
**dadurch gekennzeichnet, dass** jede Anweisungszeile eines Basisblocks durch Ausführung desselben Erstellungsalgorithmus wie jenem, der für das Erstellen der Datenelementzeile ausgeführt wird, und unter Verwendung derselben Funktion Fᵢᵥ erstellt wird (150), wobei hierfür das Datenelement mit der Anweisung, die mit Hilfe der mit diesem Basisblock assoziierten Maske maskiert wird, gleichgesetzt wird, damit das Laden dieser Anweisungszeile durch die Ausführung einer Anweisung zum Laden einer Datenelementzeile nicht systematisch die Signalisierung eines Ausführungsfehlers auslöst.

2. Verfahren nach Anspruch 1, wobei das Verfahren eine Phase (230) der Umordnung des Hauptspeichers umfasst, während derer Anweisungszeilen im Hauptspeicher verschoben werden, wobei diese Phase der Umordnung des Hauptspeichers für jede verschobene Anweisungszeile Folgendes umfasst:
- Ausführen (232), durch die arithmetisch-logische Einheit, einer Anweisung zum Laden einer Datenelementzeile, wobei die mittels des Operanden erhaltene Adresse die Adresse @ⱼ₁ der zu verschiebenden Anweisungszeile ist, und dann
- Überprüfen (284), auf dieselbe Weise wie bei jeder geladenen Datenelementzeile, dass die so geladene Anweisungszeile tatsächlich mit Hilfe des Initialisierungsvektors ivⱼ₁ erstellt wurde, der durch die Funktion Fᵢᵥ mit der Adresse @ⱼ₁, die mittels des Operanden der Ladeanweisung erhalten wurde, assoziiert ist, und wenn diese Überprüfung fehlschlägt, Auslösen der Signalisierung eines Ausführungsfehlers, und wenn diese Überprüfung erfolgreich ist, Unterdrücken dieser Signalisierung eines Ausführungsfehlers.

3. Verfahren nach einem der vorhergehenden Ansprüche, wobei in Schritt b) auf das Laden der durch den Programmzähler des Mikroprozessors bestimmten Anweisungszeile ferner systematisch, auf dieselbe Weise wie bei der Datenelementzeile, das Überprüfen (180) folgt, dass die geladene Anweisungszeile tatsächlich mit Hilfe des Initialisierungsvektors ivⱼ, der durch die Funktion Fᵢᵥ mit der durch den Programmzähler bestimmten Adresse @ⱼ assoziiert ist, erstellt wurde, und wenn diese Überprüfung fehlschlägt, Auslösen der Signalisierung eines Ausführungsfehlers, und wenn diese Überprüfung erfolgreich ist, Unterdrücken dieser Signalisierung eines Ausführungsfehlers.

4. Verfahren nach einem der vorhergehenden Ansprüche, wobei das Entschlüsseln des in der geladenen Anweisungszeile enthaltenen Kryptogramms Folgendes umfasst:
- Entschlüsseln (178) des Kryptogramms mit Hilfe des Initialisierungsvektors ivⱼ, der durch die Funktion Fᵢᵥ mit der durch den Programmzähler bestimmten Adresse @ⱼ assoziiert ist, um eine entschlüsselte maskierte Anweisung zu erhalten,
- Ausführen (184) einer vorgegebenen Evolutionsfunktion, um eine von der geladenen Maske abgeleitete Maske zu erhalten, wobei die erhaltene abgeleitete Maske bei jeder Ausführung dieser Evolutionsfunktion unterschiedlich ist, und dann
- Entschlüsseln (184) der entschlüsselten maskierten Anweisung mit Hilfe der erhaltenen abgeleiteten Maske, um die entschlüsselte Anweisung zu erhalten, die durch die arithmetisch-logische Einheit ausgeführt wird.

5. Verfahren nach Anspruch 4, wobei die Evolutionsfunktion aus der Gruppe ausgewählt ist, die aus Folgendem besteht:
- einer Permutationsfunktion,
- einem linear rückgekoppelten Schieberegister,
- einer Flusschiffre,
- einer Bit-zu-Bit-Kombination zwischen den Bits der geladenen Maske und Bits, die bei jeder Ausführung einer vorhergehenden Anweisung desselben Basisblocks variieren können, und
- einer Zusammensetzung aus einer oder mehreren der vorhergehenden Funktionen.

6. Verfahren nach Anspruch 5, wobei die Bits, die bei jeder Ausführung einer vorhergehenden Anweisung desselben Basisblocks variieren können, aus der Gruppe ausgewählt sind, die aus Folgendem besteht:
- den Bits einer vorhergehenden Anweisung desselben Basisblocks und
- den Bits zur Steuerung der Ausführung einer vorhergehenden Anweisung desselben Basisblocks, wobei diese Steuerbits von den Anweisungsbits verschiedene Bits sind und bei jeder Ausführung einer Anweisung von dem Mikroprozessor aktualisiert werden.

7. Verfahren nach einem der vorhergehenden Ansprüche, wobei:
- jede Ausführung (252, 254) des Algorithmus zum Erstellen einer Datenelementzeile, die unter einer Adresse @ⱼ aufzuzeichnen ist, Folgendes umfasst:
• Berechnen eines Initialisierungsvektors ivⱼ mit Hilfe der Gleichung ivⱼ = Fᵢᵥ(@ⱼ), wobei @ⱼ die Adresse ist, unter der die Datenelementzeile in dem Hauptspeicher aufgezeichnet werden soll,
• Erstellen eines Fehlererkennungscodes, der es gestattet, einen Fehler in dem Datenelement zu erkennen,
• Verketten des erstellten Fehlererkennungscodes mit dem Datenelement, um eine Verkettung CDⱼ zu erhalten, und dann
• Verschlüsseln der Verkettung CDⱼ mit Hilfe des berechneten Initialisierungsvektors ivⱼ, um das Kryptogramm des Datenelements zu erhalten, und dann
• Eingliedern des Kryptogramms des Datenelements in die erstellte Datenelementzeile,
- jeder Überprüfung, dass die geladene Datenelementzeile tatsächlich mit Hilfe des Initialisierungsvektors ivⱼ, der durch die Funktion Fᵢᵥ mit einer Adresse @ⱼ, aus der diese Datenelementzeile geladen wurde, assoziiert ist, erstellt wurde, die folgenden Operationen vorangehen:
• Berechnen (278) eines Initialisierungsvektors ivⱼ mit Hilfe der Gleichung ivⱼ = Fᵢᵥ(@ⱼ), wobei @ⱼ die Adresse ist, aus der die Datenelementzeile aus dem Hauptspeicher geladen wurde, und dann
• Entschlüsseln (278) des Kryptogramms des Datenelements, das in der geladenen Datenelementzeile enthalten ist, mit Hilfe des berechneten Initialisierungsvektors ivⱼ, um eine entschlüsselte Verkettung zu erhalten, und dann
- jede Überprüfung (284), dass die geladene Datenelementzeile tatsächlich mit Hilfe des Initialisierungsvektors ivⱼ, der durch die Funktion Fᵢᵥ mit einer Adresse @ⱼ, aus der diese Datenelementzeile geladen wurde, assoziiert ist, erstellt wurde, Folgendes umfasst:
• Verwenden des in der entschlüsselten Verkettung enthaltenen Fehlererkennungscodes, um einen Fehler in dem in dieser entschlüsselten Verkettung enthaltenen Datenelement zu erkennen, und
• wobei, wenn ein Fehler erkannt wird, die Überprüfung, dass die geladene Datenelementzeile tatsächlich mit Hilfe des Initialisierungsvektors ivⱼ, der durch die Funktion Fᵢᵥ mit der Adresse @ⱼ, aus der diese Datenelementzeile geladen wurde, assoziiert ist, erstellt wurde, fehlschlägt, und im gegenteiligen Fall die Überprüfung erfolgreich ist.

8. Verfahren nach den Ansprüchen 2 und 7 zusammen, wobei die Phase (230) der Umordnung für jede geladene Anweisungszeile ferner Folgendes umfasst:
- Entschlüsseln (278) des Kryptogramms der in der geladenen Anweisungszeile enthaltenen Verkettung, um eine maskierte Anweisung zu erhalten, und dann
- Ausführen (254) des Algorithmus zum Erstellen einer Datenelementzeile mit einem dieser maskierten Anweisung entsprechenden Datenelement, um eine neue Anweisungszeile zu erhalten, die dazu bestimmt ist, in dem Hauptspeicher unter einer Adresse @ⱼ₂, die sich von der Adresse @ⱼ₁ unterscheidet, aufgezeichnet zu werden, und dann
- Aufzeichnen (254), in dem Hauptspeicher, der erstellten neuen Anweisungszeile unter der Adresse @ⱼ₂.

9. Verfahren nach einem der vorhergehenden Ansprüche, wobei der Erstellungsalgorithmus das Kryptogramm des Datenelements ferner unter Verwendung eines geheimen Schlüssels, der von der Adresse @ⱼ unabhängig ist, erstellt.

10. Verfahren nach einem der vorhergehenden Ansprüche, wobei in Schritt a) die aufgezeichneten Basisblöcke mindestens einen ersten vorhergehenden Basisblock (70, 82) umfassen, wobei:
- die Verzweigungsanweisung eine indirekte Verzweigungsanweisung ist, das heißt eine Verzweigungsanweisung, die einen Operanden enthält, der ein Zielregister identifiziert, und die, wenn sie durch den Mikroprozessor ausgeführt wird, eine direkte Verzweigung zu der ersten verschlüsselten Anweisungszeile eines nachfolgenden Basisblocks bewirkt, deren Adresse mittels des Inhalts dieses Zielregisters erhalten wird,
- die Ladeanweisung eine indirekte Ladeanweisung ist, das heißt eine Ladeanweisung, die einen Operanden enthält, der dasselbe Zielregister wie jenes, das durch den Operanden der indirekten Verzweigungsanweisung identifiziert wird, identifiziert, und die, wenn sie durch den Mikroprozessor ausgeführt wird, Folgendes bewirkt:
- Lesen einer Datenelementzeile, die mit der Adresse, die mittels des Inhalts des Zielregisters erhalten wurde, assoziiert ist, und dann
- Erstellen einer Maske mittels des Inhalts dieser gelesenen Datenelementzeile, und dann
- Laden dieser erstellten Maske in den Mikroprozessor,
- der Schritt c) außerdem Folgendes umfasst:
• Ausführen der indirekten Ladeanweisung des ersten vorhergehenden Basisblocks, und dann
• Ausführen der indirekten Verzweigungsanweisung des ersten vorhergehenden Basisblocks.

11. Verfahren nach Anspruch 10, wobei die Datenelementzeile, die mit der Adresse, die mittels des Inhalts des Zielregisters erhalten wurde, assoziiert ist, die erste Zeile jedes nachfolgenden Basisblocks ist, wobei diese Datenelementzeile im Gegensatz zu einer Anweisungszeile keinen durch den Mikroprozessor ausführbaren Opcode einer Anweisung codiert.

12. Binärcode einer gesicherten Funktion, der durch einen Mikroprozessor ausführbar ist, um ein Ausführungsverfahrens nach einem der vorhergehenden Ansprüche umzusetzen, wobei der Binärcode einen Maschinencode umfasst, der eine Folge von Basisblöcken enthält, und wobei:
- jeder Basisblock eine Folge von Anweisungszeilen umfasst, die jeweils ein Kryptogramm einer Anweisung enthalten, wobei die in diesen aufeinanderfolgenden Anweisungszeilen codierten Anweisungen dazu bestimmt sind, durch den Mikroprozessor systematisch in der Reihenfolge, in der sie in diesem Basisblock auftreten, ausgeführt zu werden,
- jeder Basisblock an einer Verzweigungsadresse startet und mit einer Anweisungszeile, die das Kryptogramm einer Verzweigungsanweisung zu einer Verzweigungsadresse eines anderen Basisblocks enthält, endet, wobei dieser andere Basisblock "nachfolgender Basisblock" genannt wird und der Basisblock, der mit der Anweisungszeile, die das Kryptogramm dieser Verzweigungsanweisung zu diesem nachfolgenden Basisblock enthält, endet, "vorhergehender Basisblock" genannt wird,
- das Kryptogramm, das in jeder verschlüsselten Anweisungszeile eines Basisblocks enthalten ist, von einer mit diesem Basisblock assoziierten Maske abhängt, wobei sich diese Maske von den mit den anderen Basisblöcken assoziierten Masken unterscheidet,
- jeder vorhergehende Basisblock eine Anweisungszeile enthält, die das Kryptogramm einer Anweisung zum Laden einer Maske enthält, die, wenn sie durch den Mikroprozessor ausgeführt wird, bewirkt, dass die Maske, die zum Erhalten einer Anweisung mittels des Kryptogramms jeder Anweisungszeile des nachfolgenden Basisblocks zu verwenden ist, in den Mikroprozessor geladen wird,
- der Maschinencode auch Anweisungen umfasst, die, wenn sie durch den Mikroprozessor ausgeführt werden, Folgendes bewirken:
- Aufzeichnen von Datenelementen in dem Hauptspeicher, und für jedes aufzuzeichnende Datenelement:
▪ Ausführen eines Algorithmus zum Erstellen einer Datenelementzeile, die ein Kryptogramm dieses Datenelements enthält, das mit Hilfe eines Initialisierungsvektors ivⱼ, der durch eine Gleichung ivⱼ = Fᵢᵥ(@ⱼ) mit einer Adresse @ⱼ des Hauptspeichers assoziiert ist, erstellt wird, wobei die Funktion Fᵢᵥ eine vorprogrammierte Funktion ist, die jeder unterschiedlichen Adresse @ⱼ des Hauptspeichers einen unterschiedlichen Initialisierungsvektor ivⱼ zuordnet, und dann
▪ Aufzeichnen, in dem Hauptspeicher, dieser erstellten Datenelementzeile unter der Adresse @ⱼ,
- Ausführen, durch die arithmetisch-logische Einheit, einer Anweisung zum Laden der Datenelementzeile, wobei diese Ladeanweisung einen Operanden umfasst, mittels dessen die Adresse @ⱼ, unter der die aus dem Hauptspeicher zu ladende Datenelementzeile aufgezeichnet ist, erhalten wird, und anschließend Überprüfen, dass die geladene Datenelementzeile tatsächlich mit Hilfe des Initialisierungsvektors ivⱼ, der durch die Funktion Fᵢᵥ mit dieser Adresse @ⱼ assoziiert ist, erstellt wurde, und wenn diese Überprüfung fehlschlägt, Auslösen der Signalisierung eines Ausführungsfehlers, und wenn diese Überprüfung erfolgreich ist, Unterdrücken dieser Signalisierung eines Ausführungsfehlers,
- Ausführen eines vorhergehenden und eines nachfolgenden Basisblocks, und bei der Ausführung jeder Anweisung des nachfolgenden Basisblocks:
• Laden, aus dem Hauptspeicher, der Anweisungszeile, die durch einen Programmzähler des Mikroprozessors bestimmt wird, und anschließend Entschlüsseln des Kryptogramms, das in der geladenen Anweisungszeile enthalten ist, unter Verwendung der Maske, die bei der Ausführung des vorhergehenden Basisblocks in den Mikroprozessor geladen wurde, und dann
• Ausführen, durch eine arithmetisch-logische Einheit des Mikroprozessors, der entschlüsselten Anweisung,
**dadurch gekennzeichnet, dass** jede Anweisungszeile eines Basisblocks auf dieselbe Weise wie die Datenelementzeile erstellt wird und unter Verwendung derselben Funktion Fᵢᵥ, wobei hierfür das Datenelement der Anweisung, die mit Hilfe der mit diesem Basisblock assoziierten Maske maskiert wird, entspricht, damit das Laden dieser Anweisungszeile durch die Ausführung einer Anweisung zum Laden einer Datenelementzeile nicht systematisch die Signalisierung eines Ausführungsfehlers auslöst.

13. Medium zur Aufzeichnung von Informationen, die durch einen Mikroprozessor lesbar sind, **dadurch gekennzeichnet, dass** es einen Binärcode nach Anspruch 12 umfasst.

14. Mikroprozessor (2) für die Umsetzung eines Verfahrens nach einem der Ansprüche 1 bis 11, wobei dieser Mikroprozessor dazu konfiguriert ist, die folgenden Schritte auszuführen:
- Aufzeichnen von Datenelementen in dem Hauptspeicher, und für jedes aufzuzeichnende Datenelement, Ausführen der folgenden Operationen:
• Ausführen eines Algorithmus zum Erstellen einer Datenelementzeile, die ein Kryptogramm dieses Datenelements enthält, das mit Hilfe eines Initialisierungsvektors ivⱼ, der durch eine Gleichung ivⱼ = Fᵢᵥ(@ⱼ) mit einer Adresse @ⱼ des Hauptspeichers assoziiert ist, erstellt wird, wobei die Funktion Fᵢᵥ eine vorprogrammierte Funktion ist, die jeder unterschiedlichen Adresse @ⱼ des Hauptspeichers einen unterschiedlichen Initialisierungsvektor ivⱼ zuordnet, und dann
• Aufzeichnen, in dem Hauptspeicher, dieser erstellten Datenelementzeile unter der Adresse @ⱼ,
- Ausführen einer Anweisung zum Laden der Datenelementzeile, wobei diese Ladeanweisung einen Operanden umfasst, mittels dessen die Adresse @ⱼ, unter der die aus dem Hauptspeicher zu ladende Datenelementzeile aufgezeichnet ist, erhalten wird, und anschließend Überprüfen, dass die geladene Datenelementzeile tatsächlich mit Hilfe des Initialisierungsvektors ivⱼ, der durch die Funktion Fᵢᵥ mit dieser Adresse @ⱼ assoziiert ist, erstellt wurde, und wenn diese Überprüfung fehlschlägt, Auslösen der Signalisierung eines Ausführungsfehlers, und wenn diese Überprüfung erfolgreich ist, Unterdrücken dieser Signalisierung eines Ausführungsfehlers,
- Ausführen eines vorhergehenden und eines nachfolgenden Basisblocks, und bei der Ausführung jeder Anweisung des nachfolgenden Basisblocks:
• Laden, aus dem Hauptspeicher, der Anweisungszeile, die durch einen Programmzähler des Mikroprozessors bestimmt wird, und anschließend Entschlüsseln des Kryptogramms, das in der geladenen Anweisungszeile enthalten ist, unter Verwendung der Maske, die bei der Ausführung des vorhergehenden Basisblocks in den Mikroprozessor geladen wurde, und dann
• Ausführen, durch eine arithmetisch-logische Einheit des Mikroprozessors, der entschlüsselten Anweisung,
**dadurch gekennzeichnet, dass** der Mikroprozessor ferner dazu konfiguriert ist, das Laden einer Anweisungszeile eines Basisblocks durch das Ausführen einer Anweisung zum Laden einer Datenelementzeile auszuführen, wobei jede Anweisungszeile eines Basisblocks zu diesem Zweck vorab durch Ausführung desselben Erstellungsalgorithmus wie jenem, der für das Erstellen der Datenelementzeile ausgeführt wird, und unter Verwendung derselben Funktion Fᵢᵥ erstellt wurde, wobei hierfür das Datenelement mit der Anweisung, die mit Hilfe der mit diesem Basisblock assoziierten Maske maskiert wird, gleichgesetzt wird, damit dieses Laden nicht systematisch die Signalisierung eines Ausführungsfehlers auslöst.

15. Compiler (300), der dazu fähig ist, einen Quellcode einer gesicherten Funktion automatisch in einen Binärcode dieser gesicherten Funktion umzuwandeln, **dadurch gekennzeichnet, dass** der Compiler dazu fähig ist, den Quellcode automatisch in einen Binärcode nach Anspruch 12 umzuwandeln.

## Claims

1. Method for the execution of a binary code of a secure function by a microprocessor, this method comprising the following steps:
a) providing (150) the binary code, the binary code that is provided comprising a machine code containing a sequence of basic blocks, wherein:
- each basic block comprises a sequence of instruction lines each containing a cryptogram of an instruction, the instructions coded in these successive instruction lines being intended to be executed systematically by the microprocessor in the order in which they appear in this basic block,
- each basic block starts at a branch address and ends with an instruction line containing the cryptogram of a branch instruction to a branch address of another basic block, this other basic block being called "the following basic block" and the basic block that ends with the instruction line containing the cryptogram of this branch instruction to this following basic block being called "the previous basic block",
- the cryptogram contained in each encrypted instruction line of a basic block depends on a mask associated with this basic block, this mask being different from the masks associated with the other basic blocks,
- each previous basic block contains an instruction line containing the cryptogram of an instruction to load a mask that, when it is executed by the microprocessor, causes loading, to the microprocessor, of the mask to be used to obtain an instruction from the cryptogram of each instruction line of the following basic block,
b) execution (152) of the binary code by the microprocessor, in this execution the method comprises:
- recording data in the main memory for each item of data to be recorded, the method comprising:
• executing (254) an algorithm for constructing a data line containing a cryptogram of this item of data constructed using an initialization vector ivⱼ associated with an address @ⱼ of the main memory using a relationship ivⱼ = Fᵢᵥ(@ⱼ), where the function Fᵢᵥ is a pre-programmed function that associates a different initialization vector ivⱼ with each different address @ⱼ of the main memory, and then
• recording this constructed data line in the main memory at the address @ⱼ,
- execution, by the arithmetic and logic unit, of an instruction to load the data line, this load instruction containing an operand from which the address @ⱼ where the data line to be loaded from the main memory is recorded is obtained, followed by verifying (284) that the loaded data line was actually constructed using the initialization vector ivⱼ associated with this address @ⱼ by the function Fᵢᵥ, and when this verification fails, triggering (172) signaling of an execution fault and, when this verification succeeds, preventing this signaling of an execution fault,
- executing previous and following basic blocks, and when executing each instruction of the following basic block:
• loading, from the main memory, the instruction line designated by an ordinal counter of the microprocessor, followed by decrypting (178, 184) the cryptogram contained in the loaded instruction line using the mask loaded to the microprocessor when the previous basic block was executed, and then
• execution (190) of the decrypted instruction by an arithmetic and logic unit of the microprocessor,
**characterized in that** each instruction line of a basic block is constructed (150) by executing the same construction algorithm as the one executed to construct the data line and using the same function Fᵢᵥ, the item of data for this purpose being taken to be equal to the instruction masked using the mask associated with this basic block, such that loading this instruction line by executing an instruction to load a data line does not systematically trigger signaling of an execution fault.

2. Method according to Claim 1, wherein the method comprises a phase (230) of rearranging the main memory in which instruction lines are moved in the main memory, this phase of rearranging the main memory comprising, for each moved instruction line:
- execution (232), by the arithmetic and logic unit, of an instruction to load a data line in which the address obtained from the operand is the address @ⱼ₁ of the instruction line to be moved, and then
- verifying (284), in the same way as for any loaded data line, that the instruction line thus loaded was actually constructed using the initialization vector ivⱼ₁ associated, by the function Fᵢᵥ, with the address @ⱼ₁ obtained from the operand of the load instruction, and when this verification fails, triggering signaling of an execution fault and, when this verification succeeds, preventing this signaling of an execution fault.

3. Method according to either one of the preceding claims, wherein, in step b), the loading of the instruction line designated by the ordinal counter of the microprocessor is also followed systematically by verifying (180), in the same way as for the data line, that the loaded instruction line was actually constructed using the initialization vector ivⱼ₁ associated, by the function Fᵢᵥ, with the address @ⱼ designated by the ordinal counter, and when this verification fails, triggering signaling of an execution fault and, when this verification succeeds, preventing this signaling of an execution fault.

4. Method according to any one of the preceding claims, wherein decrypting the cryptogram contained in the loaded instruction line comprises:
- decrypting (178) the cryptogram using the initialization vector ivⱼ associated, by the function Fᵢᵥ, with the address @ⱼ designated by the ordinal counter in order to obtain a decrypted masked instruction,
- executing (184) a predetermined evolution function in order to obtain a mask derived from the loaded mask, the derived mask that is obtained being different at each execution of this evolution function, and then
- decrypting (184) the decrypted masked instruction using the derived mask that is obtained in order to obtain the decrypted instruction executed by the arithmetic and logic unit.

5. Method according to Claim 4, wherein the evolution function is chosen from the group formed of:
- a swap function,
- a linear feedback shift register,
- a stream cipher,
- a bit-by-bit combination between the bits of the loaded mask and bits liable to vary upon each execution of a previous instruction of the same basic block, and
- a composition of one or more of the above functions.

6. Method according to Claim 5, wherein the bits liable to vary upon each execution of a previous instruction of the same basic block are chosen from the group formed of:
- bits of a previous instruction of the same basic block, and
- check bits from the execution of a previous instruction of the same basic block, these check bits being separate bits from the bits of the instructions and updated by the microprocessor upon each execution of an instruction.

7. Method according to any one of the preceding claims, wherein:
- each execution (252, 254) of the algorithm for constructing a data line to be recorded at an address @ⱼ comprises:
• calculating an initialization vector ivⱼ using the relationship ivⱼ = Fᵢᵥ(@ⱼ), where @ⱼ is the address at which the data line should be recorded in the main memory,
• constructing an error detection code for detecting an error in the item of data,
• concatenating the constructed error detection code with the item of data in order to obtain a concatenation CDⱼ, and then
• encrypting the concatenation CDⱼ using the calculated initialization vector ivⱼ in order to obtain the cryptogram of the item of data, and then
• incorporating the cryptogram of the item of data into the constructed data line,
- each verification that the loaded data line was actually constructed using the initialization vector ivⱼ associated, by the function Fᵢᵥ, with an address @ⱼ from which this data line was loaded is preceded by the following operations:
• calculating (278) an initialization vector ivⱼ using the relationship ivⱼ = Fᵢᵥ(@ⱼ), where @ⱼ is the address from which the data line was loaded from the main memory, and then
• decrypting (278) the cryptogram of the item of data contained in the loaded data line using the calculated initialization vector ivⱼ in order to obtain a decrypted concatenation, and then
- each verification (284) that the loaded data line was actually constructed using the initialization vector ivⱼ associated, by the function Fᵢᵥ, with an address @ⱼ from which this data line was loaded comprises:
• using the error detection code contained in the decrypted concatenation to detect an error in the item of data contained in this decrypted concatenation, and
• if an error is detected, the verification that the loaded data line was actually constructed using the initialization vector ivⱼ associated, by the function Fᵢᵥ, with an address @ⱼ from which this data line was loaded fails and, in the opposite case, the verification succeeds.

8. Method according to Claims 2 and 7 taken together, wherein the rearrangement phase (230) also comprises, for each loaded instruction line:
- decrypting (278) the cryptogram of the concatenation contained in the loaded instruction line in order to obtain a masked instruction, and then
- executing (254) the algorithm for constructing a data line with an item of data equal to this masked instruction in order to obtain a new instruction line intended to be recorded in the main memory at an address @ⱼ₂ different from the address @ⱼ₁, and then
- recording (254) the new constructed instruction line in the main memory at the address @ⱼ₂.

9. Method according to any one of the preceding claims, wherein the construction algorithm constructs the cryptogram of the item of data also using a secret key that is independent of the address @ⱼ.

10. Method according to any one of the preceding claims, wherein, in step a), the recorded basic blocks comprise at least one first previous basic block (70, 82), wherein:
- the branch instruction is an indirect branch instruction, that is to say a branch instruction containing an operand that identifies a destination register and that, when it is executed by the microprocessor, causes a direct branch to the first encrypted instruction line of a following basic block whose address is obtained from the content of this destination register,
- the load instruction is an indirect load instruction, that is to say a load instruction containing an operand that identifies the same destination register as the one identified by the operand of the indirect branch instruction and that, when it is executed by the microprocessor, causes:
- reading of a data line associated with the address obtained from the content of the destination register, and then
- construction of a mask from the content of this read data line, and then
- loading of this constructed mask to the microprocessor,
- step c) additionally comprises:
• executing the indirect load instruction of the first previous basic block, and then
• executing the indirect branch instruction of the first previous basic block.

11. Method according to Claim 10, wherein the data line associated with the address obtained from the content of the destination register is the first line of each following basic block, this data line, unlike an instruction line, not coding any opcode of an instruction able to be executed by the microprocessor.

12. Binary code of a secure function able to be executed by a processor in order to implement an execution method according to any one of the preceding claims, wherein the binary code comprises a machine code containing a sequence of basic blocks and wherein:
- each basic block comprises a sequence of instruction lines each containing a cryptogram of an instruction, the instructions coded in these successive instruction lines being intended to be executed systematically by the microprocessor in the order in which they appear in this basic block,
- each basic block starts at a branch address and ends with an instruction line containing the cryptogram of a branch instruction to a branch address of another basic block, this other basic block being called "the following basic block" and the basic block that ends with the instruction line containing the cryptogram of this branch instruction to this following basic block being called "the previous basic block",
- the cryptogram contained in each encrypted instruction line of a basic block depends on a mask associated with this basic block, this mask being different from the masks associated with the other basic blocks,
- each previous basic block contains an instruction line containing the cryptogram of an instruction to load a mask that, when it is executed by the microprocessor, causes loading, to the microprocessor, of the mask to be used to obtain an instruction from the cryptogram of each instruction line of the following basic block,
- the machine code also comprises instructions that, when they are executed by the microprocessor, cause:
- recording of data in the main memory and, for each item of data to be recorded:
▪ execution of an algorithm for constructing a data line containing a cryptogram of this item of data constructed using an initialization vector ivⱼ associated with an address @ⱼ of the main memory using a relationship ivⱼ = Fᵢᵥ(@ⱼ), where the function Fᵢᵥ is a pre-programmed function that associates a different initialization vector ivⱼ with each different address @ⱼ of the main memory, and then
▪ recording of this constructed data line in the main memory at the address @ⱼ,
- execution, by the arithmetic and logic unit, of an instruction to load the data line, this load instruction containing an operand from which the address @ⱼ where the data line to be loaded from the main memory is recorded is obtained, followed by verifying that the loaded data line was actually constructed using the initialization vector ivⱼ associated with this address @ⱼ by the function Fᵢᵥ, and when this verification fails, triggering signaling of an execution fault and, when this verification succeeds, preventing this signaling of an execution fault,
- execution of previous and following basic blocks, and when executing each instruction of the following basic block:
• loading, from the main memory, of the instruction line designated by an ordinal counter of the microprocessor, followed by decryption of the cryptogram contained in the loaded instruction line using the mask loaded to the microprocessor when the previous basic block was executed, and then
• execution of the decrypted instruction by an arithmetic and logic unit of the microprocessor,
**characterized in that** each instruction line of a basic block is constructed in the same way as the data line and using the same function Fᵢᵥ, the item of data for this purpose being equal to the instruction masked using the mask associated with this basic block, such that loading this instruction line by executing an instruction to load a data line does not systematically trigger signaling of an execution fault.

13. Information recording medium, said information being able to be read by a microprocessor, **characterized in that** it contains a binary code according to Claim 12.

14. Microprocessor (2) for implementing a method according to any one of Claims 1 to 11, this microprocessor being configured so as to execute the following steps:
- recording data in the main memory and executing the following operations for each item of data to be recorded:
• executing an algorithm for constructing a data line containing a cryptogram of this item of data constructed using an initialization vector ivⱼ associated with an address @ⱼ of the main memory using a relationship ivⱼ = Fᵢᵥ(@ⱼ), where the function Fᵢᵥ is a pre-programmed function that associates a different initialization vector ivⱼ with each different address @ⱼ of the main memory, and then
• recording this constructed data line in the main memory at the address @ⱼ,
- executing an instruction to load the data line, this load instruction containing an operand from which the address @ⱼ where the data line to be loaded from the main memory is recorded is obtained, followed by verifying that the loaded data line was actually constructed using the initialization vector ivⱼ associated with this address @ⱼ by the function Fᵢᵥ, and when this verification fails, triggering signaling of an execution fault and, when this verification succeeds, preventing this signaling of an execution fault,
- executing previous and following basic blocks, and when executing each instruction of the following basic block:
• loading, from the main memory, the instruction line designated by an ordinal counter of the microprocessor, followed by decryption of the cryptogram contained in the loaded instruction line using the mask loaded to the microprocessor when the previous basic block was executed, and then
• execution of the decrypted instruction by an arithmetic and logic unit of the microprocessor,
**characterized in that** the microprocessor is also configured so as to execute the loading of an instruction line of a basic block by executing an instruction to load a data line, each instruction line of a basic block having been constructed beforehand for this purpose by executing the same construction algorithm as the one executed to construct the data line and using the same function Fᵢᵥ, the item of data for this purpose being taken to be equal to the instruction masked using the mask associated with this basic block, such that this loading does not systematically trigger signaling of an execution fault.

15. Compiler (300) able to automatically convert a source code of a secure function into a binary code of this secure function, **characterized in that** the compiler is able to automatically convert the source code into a binary code according to Claim 12.
